# EUROPEAN PATENT APPLICATION

(11) **EP 4 135 263 A1**
(43) Date of publication of application: **15.02.2023**
(21) Application number: 20933303.8
(22) Date of filing: 29.04.2020
(51) Int. Cl.: H04L 12/24

(54) **DATA COMMUNICATION METHOD AND RELATED APPARATUS**

(71) Applicant: Huawei Technologies Co., Ltd., Shenzhen, Guangdong 518129 (CN)
(72) Inventor: LIU, Hang, Shenzhen, Guangdong 518129 (CN); WANG, Jian, Shenzhen, Guangdong 518129 (CN)
(74) Representative: Pfenning, Meinig & Partner mbB
(86) International application number: PCT/CN2020/087916
(87) International publication number: WO 2021/217528

(57) **Abstract**

This application provides a data communication method and a related apparatus, which are applied to the field of short range communication, and in particular, to cockpit domain communication. The method includes: obtaining at least one piece of service feature information from an upper layer of a secondary node, where the upper layer includes at least one of a network and transport layer, a device layer, and an application, and the at least one piece of service feature information includes at least one of a sampling frequency, quantization precision of a sample value, a frame rate, an image resolution, a compression rate, and a data rate; and sending first information to a primary node through an access layer of the secondary node, where the first information indicates the at least one piece of service feature information. According to embodiments of this application, quality of service requirements of different services can be ensured.

## Description

### TECHNICAL FIELD

This application relates to the field of communication technologies, and in particular, to the field of short range communication technologies, for example, cockpit domain communication, and specifically, to a data communication method and a related apparatus.

### BACKGROUND

As living standards are improving, means of transportation for people have developed from simple "physical strength" to diversified "convenient" transportation modes. A representative change is a change from "two wheels" into "four wheels". Further, as smart cockpit technologies develop rapidly, in addition to being transportation means, vehicles become a part of people's living space. People expect a smart cockpit to be more convenient and provide more services, for example, provide diversified entertainment activities and a comfortable office experience.

Currently, the smart cockpit includes a cockpit domain controller (cockpit domain controller, CDC), vehicle-mounted devices such as a vehicle-mounted sound box, a vehicle-mounted microphone, a vehicle-mounted loudspeaker, and a vehicle-mounted display, and a plurality of non-vehicle-mounted devices such as smart terminals and other portable devices that subsequently enter the cockpit. The CDC may communicate with a plurality of devices included in the smart cockpit through wireless or wired connection. For example, in an application scenario of in-vehicle active noise cancelation, a plurality of vehicle-mounted microphones collect a noise signal in a vehicle, and transmit the collected noise signal to the CDC. The CDC generates a sound wave signal whose phase is opposite to that of the noise signal and whose amplitude is the same as that of the noise signal, and the sound wave signal is played through the vehicle-mounted loudspeaker, to cancel noise, thereby achieving active noise cancelation. In an actual application, to ensure normal implementation of an in-vehicle active noise cancelation service, it needs to be ensured that delays are low in a series of operations, such as noise collection, processing, and transmission, generation of an inverse phase noise signal, transmission of the inverse phase noise signal to the vehicle-mounted loudspeaker, and playing of the inverse phase noise signal, and in addition, high reliability is required for transmission of the noise signal and the inverse phase noise signal.

It may be understood that different types of services have different features, and quality of service (Quality of service, Qos) requirements corresponding to the services may be significantly different. For example, there are different requirements for indicators such as a concurrent connection quantity, a data throughput, and a transmission delay/jitter. For example, the active noise cancelation service requires a low delay, and a streaming media service requires high reliability. How to ensure quality of service of different services is an imperative technical problem to be resolved.

### SUMMARY

Embodiments of this application disclose a data communication method and a related apparatus, to ensure differentiated Qos of different services as much as possible.

According to a first aspect, an embodiment of this application provides a data communication method, where the method is applied to a secondary node. The method may include: obtaining at least one piece of service feature information from an upper layer of the secondary node; and sending first information to a primary node through an access layer of the secondary node, where the first information indicates the at least one piece of service feature information.

In this embodiment of this application, the secondary node may obtain the service feature information from the upper layer of the secondary node, and then a lower layer can learn of the service feature information of the upper layer. Therefore, the lower layer can provide a specific service for the upper layer. In this way, Qos of different services can be ensured.

In a possible implementation, the sending first information to a primary node through an access layer of the secondary node includes: generating the first information at the access layer of the secondary node, and sending the first information to the primary node through the access layer. In this embodiment of this application, in addition to obtaining the at least one piece of service feature information transferred by the upper layer, the access layer of the secondary node may further generate information such as access layer Qos information (for example, the access layer Qos information may include access layer priority information, access layer reliability information, and a Qos identifier), and a first application identifier. Then the first information including the upper-layer information and the current-layer information is sent to the primary node, so that after receiving the first information, the primary node can configure a specific resource for the secondary node. In this way, Qos of different services can be ensured.

In a possible implementation, the upper layer includes at least one of a network and transport layer, a device layer, and an application.

In a possible implementation, the first information includes the at least one piece of service feature information or at least one piece of identifier information of the at least one piece of service feature information.

In a possible implementation, the method further includes: receiving second information from the primary node through the access layer of the secondary node, where the second information is used for configuring a resource for the secondary node, and the resource is used for at least one service.

In a possible implementation, the first information further includes at least one of first access layer Qos information and a first application identifier, at least one of the first access layer Qos information and the first application identifier corresponds to a first service, and the resource is used for the first service.

In a possible implementation, the first access layer Qos information includes at least one of first access layer priority information, first access layer reliability information, and a first Qos identifier.

In a possible implementation, the resource corresponds to the at least one piece of service feature information.

In a possible implementation, the at least one piece of service feature information includes at least one of sampling frequency, quantization precision of a sample value, a frame rate, an image resolution, a compression rate, and a data rate.

In a possible implementation, the upper layer is the device layer, and the obtaining at least one piece of service feature information from an upper layer of the secondary node includes: obtaining the at least one piece of service feature information through an inter-layer interface SAP between the device layer and the access layer. During implementation of this embodiment of this application, when a protocol stack structure of the secondary node includes the access layer and the device layer, the device layer of the secondary node transfers the at least one piece of service feature information to the access layer of the secondary node through the inter-layer interface between the device layer and the access layer, and therefore, the service feature information from the upper layer may be obtained by the access layer of the secondary node. Because the service feature information from the upper layer of the secondary node can be obtained by the secondary node, the lower layer can learn of the service feature information of the upper layer. Therefore, the lower layer can provide a specific service for the upper layer. In this way, Qos of different services can be ensured.

In a possible implementation, the upper layer is the device layer, and the obtaining at least one piece of service feature information from an upper layer of the secondary node includes: obtaining the at least one piece of service feature information from the device layer through the network and transport layer, where the network and transport layer is between the device layer and the access layer. During implementation of this embodiment of this application, when the protocol stack structure of the secondary node includes the access layer, the network and transport layer, and the device layer, the device layer of the secondary node transfers the at least one piece of service feature information sequentially to the network and transport layer and the access layer through inter-layer interface SAPs between the device layer and the adjacent layers of the secondary node, and therefore, the service feature information from the upper layer can be obtained by the access layer of the secondary node. Because the service feature information from the upper layer of the secondary node can be obtained by the secondary node, the lower layer can learn of the service feature information of the upper layer. Therefore, the lower layer can provide a specific service for the upper layer. In this way, Qos of different services can be ensured.

According to a second aspect, an embodiment of this application provides a data communication method, where the method is applied to a primary node. The method may include: receiving first information from a secondary node, where the first information indicates at least one piece of service feature information; and sending second information to the secondary node, where the second information is used for configuring a resource for the secondary node, and the resource corresponds to the at least one piece of service feature information.

During implementation of this embodiment of this application, because the service feature information from the upper layer of the secondary node can be obtained by the secondary node, the lower layer can learn of the service feature information of the upper layer. Therefore, the lower layer can provide a specific service for the upper layer. When performing resource configuration based on the service feature information sent by the secondary node, the primary node may perform specific resource configuration based on the service feature information sent by the secondary node. In this implementation, Qos of different services can be ensured.

In a possible implementation, the first information includes the at least one piece of service feature information or at least one piece of identifier information of the at least one piece of service feature information.

In a possible implementation, the first information further includes at least one of first access layer Qos information and a first application identifier, at least one of the first access layer Qos information and the first application identifier corresponds to a first service, and the resource is used for the first service.

In a possible implementation, the first access layer Qos information includes at least one of first access layer priority information, first access layer reliability information, and a first Qos identifier.

In a possible implementation, the sending second information to the secondary node includes: sending the second information to the secondary node through an access layer of the primary node.

In a possible implementation, the at least one piece of service feature information includes at least one of sampling frequency, quantization precision of a sample value, a frame rate, an image resolution, a compression rate, and a data rate.

According to a third aspect, an embodiment of this application provides another data communication method, where the method is applied to a primary node. The method may include: sending third information to a secondary node through an access layer of the primary node, where the third information indicates at least one piece of first service feature information; and receiving a data packet from the secondary node, where the data packet corresponds to the at least one piece of service feature information.

During implementation of this embodiment of this application, the secondary node may generate the corresponding data packet based on the third information sent by the primary node, and then the secondary node sends the generated data packet to the primary node. In this implementation, the primary node can specifically adjust the service feature information of the secondary node based on resources of the primary node. Consequently, while service performance is ensured, smart cockpit domain resource utilization can be optimized.

In a possible implementation, the sending third information to a secondary node through an access layer of the primary node includes: generating the third information at the access layer of the primary node, and sending the third information to the secondary node through the access layer.

In a possible implementation, the method further includes: obtaining the at least one piece of service feature information from a device layer of the primary node.

In a possible implementation, the obtaining the at least one piece of service feature information from a device layer of the primary node includes: obtaining the at least one piece of service feature information from the device layer of the primary node through an inter-layer interface SAP between the device layer and the access layer of the primary node.

In a possible implementation, the obtaining the at least one piece of service feature information from a device layer of the primary node includes: obtaining the at least one piece of service feature information from the device layer of the primary node through a network and transport layer, where the network and transport layer is between the device layer and the access layer.

In a possible implementation, the obtaining the at least one piece of service feature information from a device layer of the primary node includes: obtaining the at least one piece of service feature information from the device layer of the primary node through an inter-layer interface SAP between a management entity and the access layer.

In a possible implementation, before the sending third information to a secondary node through an access layer of the primary node, the method further includes: receiving at least one piece of second service feature information from the secondary node. In this embodiment of this application, after the primary node receives the at least one piece of second service feature information of the secondary node, the primary node may perform resource configuration based on the service feature information. When performing resource configuration based on the service feature information, the primary node can specifically adjust the service feature information of the secondary node based on limited resources of the primary node. Consequently, while service performance is ensured, smart cockpit domain resource utilization can be optimized.

According to a fourth aspect, an embodiment of this application provides another data communication method, where the method is applied to a secondary node. The method may include: receiving third information from a primary node through an access layer of the secondary node, where the third information indicates at least one piece of first service feature information; and sending a data packet to the primary node, where the data packet corresponds to the at least one piece of service feature information.

During implementation of this embodiment of this application, the secondary node may generate the corresponding data packet based on the third information sent by the primary node, and then the secondary node sends the generated data packet to the primary node. In this implementation, the primary node specifically adjusts service feature information of the secondary node based on limited resources of the primary node. Consequently, while service performance is ensured, smart cockpit domain resource utilization can be optimized.

In a possible implementation, the method further includes: sending at least one piece of second service feature information to the primary node.

In a possible implementation, the method further includes: sending the third information to a device layer of the secondary node through an inter-layer interface SAP between the device layer and the access layer.

In a possible implementation, the method further includes: sending the third information to the device layer through a network and transport layer of the secondary node, where the network and transport layer is between the device layer and the access layer.

In a possible implementation, the method further includes: generating, by using the device layer, the data packet corresponding to the at least one piece of service feature information.

In a possible implementation, the method further includes: sending the third information to a device layer by using a management entity; and generating, by using the device layer, the data packet corresponding to the at least one piece of service feature information.

According to a fifth aspect, an embodiment of this application provides a data communication apparatus, where the apparatus is applied to a secondary node. The apparatus may include: an obtaining unit, configured to obtain at least one piece of service feature information from an upper layer of the secondary node; and a sending unit, configured to send first information to a primary node through an access layer of the secondary node, where the first information indicates the at least one piece of service feature information.

During implementation of this embodiment of this application, because the service feature information from the upper layer of the secondary node can be obtained by the secondary node, the lower layer can learn of the service feature information of the upper layer. Therefore, the lower layer can provide a specific service for the upper layer. In this way, Qos of different services can be ensured.

In a possible implementation, the sending unit is specifically configured to: generate the first information at the access layer of the secondary node, and send the first information to the primary node through the access layer.

In a possible implementation, the upper layer includes at least one of a network and transport layer, a device layer, and an application.

In a possible implementation, the first information includes the at least one piece of service feature information or at least one piece of identifier information of the at least one piece of service feature information.

In a possible implementation, the apparatus further includes: a receiving unit, configured to receive second information from the primary node through the access layer of the secondary node, where the second information is used for configuring a resource for the secondary node, and the resource is used for at least one service.

In a possible implementation, the first information further includes at least one of first access layer Qos information and a first application identifier, at least one of the first access layer Qos information and the first application identifier corresponds to a first service, and the resource is used for the first service.

In a possible implementation, the first access layer Qos information includes at least one of first access layer priority information, first access layer reliability information, and a first Qos identifier.

In a possible implementation, the resource corresponds to the at least one piece of service feature information.

In a possible implementation, the at least one piece of service feature information includes at least one of sampling frequency, quantization precision of a sample value, a frame rate, an image resolution, a compression rate, and a data rate.

In a possible implementation, the upper layer is the device layer, and the obtaining unit is specifically configured to obtain the at least one piece of service feature information through an inter-layer interface SAP between the device layer and the access layer.

In a possible implementation, the upper layer is the device layer, and the obtaining unit is specifically configured to obtain at least one piece of service feature information from the device layer through the network and transport layer, where the network and transport layer is between the device layer and the access layer.

According to a sixth aspect, an embodiment of this application provides a data communication apparatus, where the apparatus is applied to a primary node. The apparatus may include: a receiving unit, configured to receive first information from a secondary node, where the first information indicates at least one piece of service feature information; and a sending unit, configured to send second information to the secondary node, where the second information is used for configuring a resource for the secondary node, and the resource corresponds to the at least one piece of service feature information.

During implementation of this embodiment of this application, because service feature information from an upper layer of the secondary node can be obtained by the secondary node, a lower layer can learn of the service feature information of the upper layer. Therefore, the lower layer can provide a specific service for the upper layer. When performing resource configuration based on the service feature information sent by the secondary node, the primary node may perform specific resource configuration based on the service feature information sent by the secondary node. In this implementation, Qos of different services can be ensured.

In a possible implementation, the first information includes the at least one piece of service feature information or at least one piece of identifier information of the at least one piece of service feature information.

In a possible implementation, the first information further includes at least one of first access layer Qos information and a first application identifier, at least one of the first access layer Qos information and the first application identifier corresponds to a first service, and the resource is used for the first service.

In a possible implementation, the first access layer Qos information includes at least one of first access layer priority information, first access layer reliability information, and a first Qos identifier.

In a possible implementation, the sending unit is specifically configured to: send the second information to the secondary node through an access layer of the primary node.

In a possible implementation, the at least one piece of service feature information includes at least one of sampling frequency, quantization precision of a sample value, a frame rate, an image resolution, a compression rate, and a data rate.

According to a seventh aspect, an embodiment of this application provides another data communication apparatus, where the apparatus is applied to a primary node. The apparatus may include: a sending unit, configured to send third information to a secondary node through an access layer of a primary node, where the third information indicates at least one piece of first service feature information; and a first receiving unit, configured to receive a data packet from the secondary node, where the data packet corresponds to the at least one piece of service feature information.

During implementation of this embodiment of this application, the secondary node may generate the corresponding data packet based on the third information sent by the primary node, and then the secondary node sends the generated data packet to the primary node. In this implementation, the primary node can specifically adjust the service feature information of the secondary node based on resources of the primary node. Consequently, while service performance is ensured, smart cockpit domain resource utilization can be optimized.

In a possible implementation, the sending unit is specifically configured to: generate the third information at the access layer of the primary node, and send the third information to the secondary node through the access layer.

In a possible implementation, the apparatus further includes: an obtaining unit, configured to obtain the at least one piece of service feature information from a device layer of the primary node.

In a possible implementation, the obtaining unit is specifically configured to obtain the at least one piece of service feature information from the device layer of the primary node through an inter-layer interface SAP between the device layer and the access layer of the primary node.

In a possible implementation, the obtaining unit is specifically configured to obtain the at least one piece of service feature information from the device layer of the primary node through a network and transport layer, where the network and transport layer is between the device layer and the access layer.

In a possible implementation, the obtaining unit is specifically configured to obtain the at least one piece of service feature information from the device layer of the primary node through an inter-layer interface SAP between a management entity and the access layer.

In a possible implementation, the apparatus further includes: a second receiving unit, configured to receive at least one piece of second service feature information from the primary node.

According to an eighth aspect, an embodiment of this application further provides another data communication apparatus, where the apparatus is applied to a secondary node. The apparatus may include: a receiving unit, configured to receive third information from a primary node through an access layer of the secondary node, where the third information indicates at least one piece of first service feature information; and a first sending unit, configured to send a data packet to the primary node, where the data packet corresponds to the at least one piece of service feature information.

During implementation of this embodiment of this application, the secondary node may generate the corresponding data packet based on the third information sent by the primary node, and then the secondary node sends the generated data packet to the primary node. In this implementation, the primary node specifically adjusts service feature information of the secondary node based on limited resources of the primary node. Consequently, while service performance is ensured, smart cockpit domain resource utilization can be optimized.

In a possible implementation, the apparatus further includes: a second sending unit, configured to send at least one piece of second service feature information to the primary node.

In a possible implementation, the apparatus further includes: a third sending unit, configured to send the third information to a device layer of the secondary node through an inter-layer interface SAP between the device layer and the access layer.

In a possible implementation, the apparatus further includes: a fourth sending unit, configured to send the third information to a device layer through a network and transport layer of the secondary node, where the network and transport layer is between the device layer and the access layer.

In a possible implementation, the apparatus further includes: a first generation unit, configured to generate, by using the device layer, the data packet corresponding to the at least one piece of service feature information.

In a possible implementation, the apparatus further includes: a second generation unit, configured to send the third information to a device layer by using a management entity; and generate, by using the device layer, the data packet corresponding to the at least one piece of service feature information.

According to a ninth aspect, an embodiment of this application provides a communication apparatus, including a memory and at least one processor. The memory is configured to store computer-executable instructions, and the processor executes the computer-executable instructions stored in the memory, so that the communication apparatus implements the method according to any one of the first aspect or the fourth aspect. For example, the communication apparatus may be an electronic device with a data receiving and sending capability, for example, a secondary node, or may be a component in the electronic device with the data receiving and sending capability, for example, a chip or an integrated circuit in the secondary node.

According to a tenth aspect, an embodiment of this application provides a communication apparatus, including a memory and at least one processor. The memory is configured to store computer-executable instructions, and the processor executes the computer-executable instructions stored in the memory, so that the communication apparatus implements the method according to any one of the second aspect or the third aspect. For example, the communication apparatus may be an electronic device with a data receiving and sending capability, for example, a secondary node, or may be a component in the electronic device with the data receiving and sending capability, for example, a chip or an integrated circuit in the secondary node.

According to an eleventh aspect, an embodiment of this application provides a computer-readable storage medium. The computer-readable storage medium stores a computer program, and when the computer program is run on one or more processors, method described in any one of the first aspect, the possible implementations of the first aspect, the second aspect, the possible implementations of the second aspect, the third aspect, the possible implementations of the third aspect, the fourth aspect, or the possible implementations of the fourth aspect is performed.

According to a twelfth aspect, an embodiment of this application provides a chip system, where the chip system includes at least one processor, a memory, and an interface circuit. The interface circuit provides information input/output for the at least one processor. The memory stores a computer program, and when the computer program is run on one or more processors, method described in any one of the first aspect, the possible implementations of the first aspect, the second aspect, the possible implementations of the second aspect, the third aspect, the possible implementations of the third aspect, the fourth aspect, or the possible implementations of the fourth aspect is performed.

According to a thirteenth aspect, an embodiment of this application provides a transportation device, for example, a vehicle or an unmanned aerial vehicle. A structure of the foregoing transportation device is described by using a vehicle as an example, where the vehicle includes a primary node (for example, a vehicle cockpit domain controller CDC). The primary node is the apparatus in any one of the sixth aspect, the possible implementations of the sixth aspect, the seventh aspect, or the possible implementations of the seventh aspect. Further, the vehicle includes a secondary node (for example, at least one of modules such as a camera, a screen, a microphone, a sound box, radar, an electronic key, and a keyless entry or startup system controller). The secondary node is the apparatus described in any one of the fifth aspect, the possible implementations of the fifth aspect, the eighth aspect, or the possible implementations of the eighth aspect.

### BRIEF DESCRIPTION OF DRAWINGS

The following describes accompanying drawings used in embodiments of this application.
FIG. 1a is a schematic diagram of a structure of an OSI model according to an embodiment of this application;
FIG. 1b is a schematic diagram of a structure of a protocol stack according to an embodiment of this application;
FIG. 1c is a schematic diagram of a structure of another protocol stack according to an embodiment of this application;
FIG. 1d is a schematic diagram of a structure of another protocol stack according to an embodiment of this application;
FIG. 1e is a schematic diagram of "peer layers" of different devices according to an embodiment of this application;
FIG. 1f is a schematic diagram of data communication between a host A and a host B according to an embodiment of this application;
FIG. 2 is a schematic diagram of an architecture of a communication system according to an embodiment of this application;
FIG. 3 is a schematic diagram of an application scenario of a data communication method according to an embodiment of this application;
FIG. 4a is a schematic flowchart of a data communication method according to an embodiment of this application;
FIG. 4b is a schematic flowchart of a data communication method according to an embodiment of this application;
FIG. 5 is a schematic flowchart of a data communication method according to an embodiment of this application;
FIG. 6 is a schematic flowchart of another data communication method according to an embodiment of this application;
FIG. 7 is a schematic flowchart of another data communication method according to an embodiment of this application;
FIG. 8 is a schematic flowchart of another data communication method according to an embodiment of this application;
FIG. 9 is a schematic diagram of a structure of a data communication apparatus according to an embodiment of this application;
FIG. 10 is a schematic diagram of a structure of another data communication apparatus according to an embodiment of this application;
FIG. 11 is a schematic diagram of a structure of another data communication apparatus according to an embodiment of this application;
FIG. 12 is a schematic diagram of a structure of another data communication apparatus according to an embodiment of this application;
FIG. 13 is a schematic diagram of a structure of a communication apparatus according to an embodiment of this application; and
FIG. 14 is a schematic diagram of a structure of a communication apparatus according to an embodiment of this application.

### DESCRIPTION OF EMBODIMENTS

The following describes embodiments of this application with reference to the accompanying drawings in embodiments of this application.

In the specification, claims, and the accompanying drawings of this application, the terms "first", "second", "third", "fourth", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to listed steps or units, but optionally further includes an unlisted step or unit, or optionally further includes another inherent step or unit of the process, the method, the product, or the device.

An "embodiment" mentioned in this specification means that a particular characteristic, structure, or feature described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that an embodiment described in the specification may be combined with another embodiment.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or a network such as an Internet interacting with another system by using a signal).

The following first briefly describes related technologies and technical terms in this application for ease of understanding.

### 1. Node (node)

The node is an electronic device that has a data receiving and sending capability. For example, the node may be an automobile cockpit (Cockpit Domain) device, or a module (one or more of modules such as a cockpit domain controller (cockpit domain controller, CDC), a camera, a screen, a microphone, a sound box, an electronic key, and a keyless entry or startup system controller) in an automobile cockpit device. For another example, the node may be a factory-installed vehicle-mounted device. In a specific implementation process, the node may be a data transfer device, for example, a router, a repeater, a bridge, or a switch, or may be various types of terminal devices, including user equipment (user equipment, UE), a mobile phone (mobile phone), a tablet computer (pad), a desktop computer, a headset, a sound box, and the like, also including a machine intelligence device such as a self-driving (self-driving) device, a transportation safety (transportation safety) device, a virtual reality (virtual reality, VR) terminal device, an augmented reality (augmented reality, AR) terminal device, a machine type communication (machine type communication, MTC) device, an industrial control (industrial control) device, a remote medical (remote medical) device, a smart grid (smart grid) device, and a smart city (smart city) device, and further including a wearable device (for example, a smart watch, a smart band, or a pedometer), and the like. In some technical scenarios, a name of a device with a similar data receiving and sending capability may not be node. However, for ease of description, electronic devices with a data receiving and sending capability are collectively referred to as nodes in embodiments of this application.

### 2. Computer network architecture

A computer network architecture, referred to as network architecture (network architecture), is a hierarchical structure.

The computer network architecture is a collection of layers and protocols of the layers of the computer network. Each layer complies with one or more network protocols to implement a function of the layer. A protocol is a set of rules that control communication between two peer entities. A protocol is "horizontal". Service: An entity at any layer needs to use a lower-layer service, complies with a protocol of this layer, implements a function of this layer, and provides a service for an upper layer. Service is "vertical", and the implementation of a lower-layer protocol is transparent to an upper-layer service user. Entities at adjacent layers of a same system interact with each other through an inter-layer interface.

### 3. Open system interconnect (Open System Interconnect, OSI) reference model

An open system interconnect OSI reference model, as a hierarchical network architecture model proposed by international organization for standardization (ISO) in 1984, defines an abstract structure instead of a specific implementation description and aims to support interconnection and interworking of heterogeneous network systems.

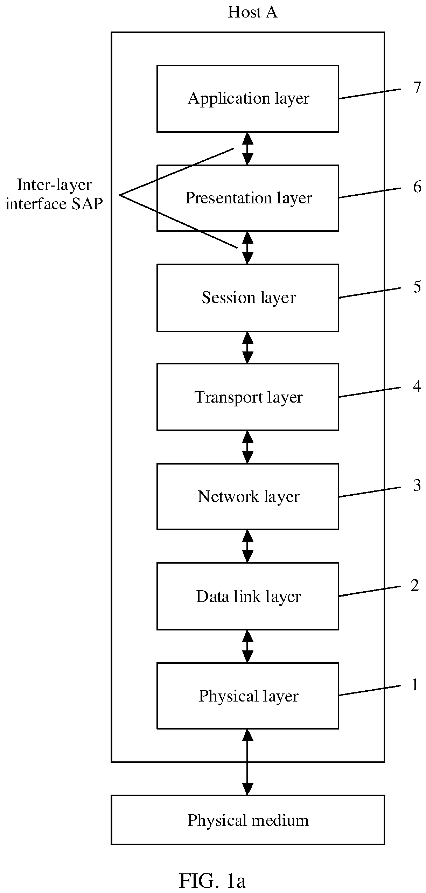

As shown in FIG. 1a, the OSI reference model may include seven layers, which are an application layer (Application Layer) 7, a presentation layer (Presentation Layer) 6, a session layer (Session Layer) 5, a transport layer (Transport Layer) 4, a network layer (Network Layer) 3, a data link layer (Data Link Layer, DDL) 2, and a physical layer (Physical Layer) 1. Each layer has its own set of functions and interacts with adjacent layers. The following describes each layer in the OSI reference model in detail.

The physical layer (Physical Layer) 1 provides a physical connection for the data link layer by using a transmission medium and transparently transmits a bit stream. Generally, channel encoding or decoding is performed at the physical layer to ensure data transmission reliability.

The data link layer (Data Link Layer, DDL) 2 ensures reliable data transmission on a physical link. Data or an instruction is encapsulated into a specific frame that can be transmitted at the physical layer. Optionally, the DDL further includes functions such as access control, resource management, data segmentation, concatenation, and error correction.

The network layer (Network Layer) 3 is responsible for selecting a route to determine a path between two nodes. Optionally, the network layer may further perform traffic control.

The transport layer (Transport Layer) 4 is responsible for providing a network line, namely, a transmission path, for the session layer.

The session layer (Session Layer) 5 is responsible for establishing, maintaining, and terminating a session between two nodes.

The presentation layer (Presentation Layer) 6 is responsible for encoding or decoding data, to convert a form of the data into a format compatible with or appropriate for transmission. Optionally, the presentation layer may decrypt and encrypt data.

The application layer (Application Layer) 7 is responsible for providing a service for an application program (also referred to as an application or a user).

In the OSI seven-layer model, each layer provides a service for its upper layer and provides an access interface or page for its upper layer, and the access interface or page is referred to as a service access point (service access point, SAP). Specifically, the interface is located between each pair of adjacent layers, and defines a service access point operation and a service provided by a lower layer to an upper layer.

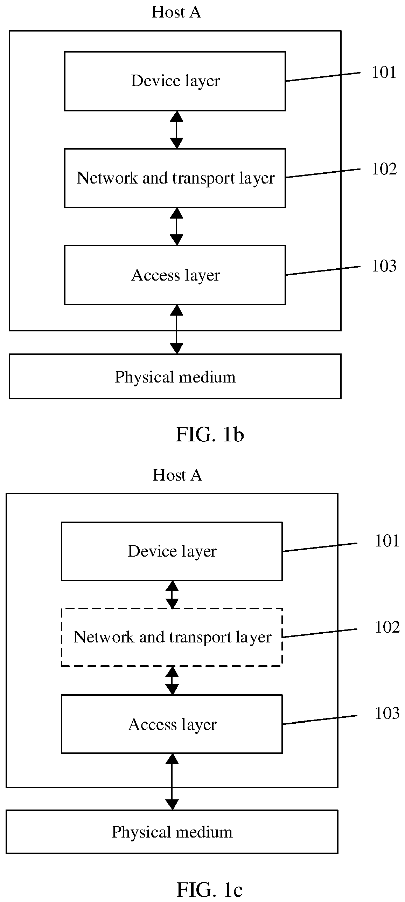

In an example of this application, a protocol stack may include an access layer, a network and transport layer, and a device layer. FIG. 1b is a schematic diagram of a structure of a protocol stack according to an embodiment of this application. The access layer 103 may provide a communication interface/a communication means for communication between nodes. The access layer 103 may include a plurality of different access technologies, and the different access technologies may correspond to different communication interfaces, for example, wireless communication interfaces such as a cellular interface and a Wi-Fi interface. The network and transport layer 102 is configured to establish a connection between a source node and a destination node, and provide a reliable end-to-end data transmission service. The device layer 101 is configured to provide application support for a user. Optionally, the device layer 101 is further configured to provide session/communication support and/or information support for the user. Optionally, the access layer 103 may correspond to the physical layer 1 and the data link layer 2 in the open system interconnect OSI model defined by the ISO. Optionally, the network and transport layer 102 may correspond to the network layer 3 and the transport layer 4 in the OSI model defined by the ISO. Optionally, the device layer 101 may correspond to the session layer 5, the presentation layer 6, and the application layer 7 in the OSI model defined by the ISO.

In still another example, because the network and transport layer 102 (shown by a dashed line in FIG. 1c) is not required in some cases (for example, only one path exists between a transmit end and a receive end, and therefore route selection is not required), for simplification, the protocol stack may not include the network and transport layer 102 as shown in FIG. 1c. In other words, the protocol stack includes only the access layer 103 and the device layer 101.

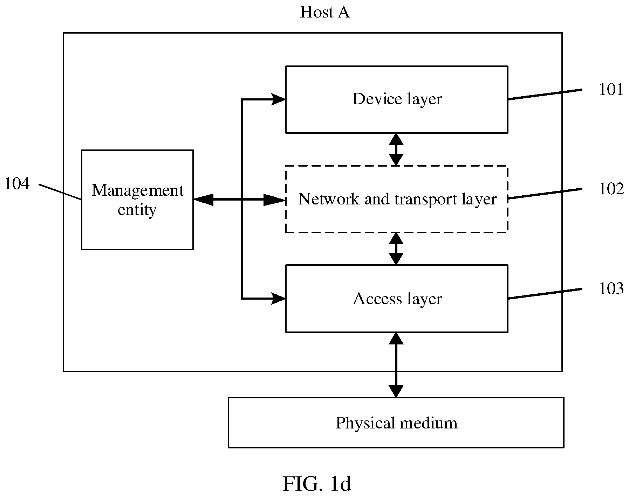

In still another example, as shown in FIG. 1d, the protocol stack includes the access layer 103, the network and transport layer 102 (optional), the device layer 101, and a management entity 104. The management entity 140 manages the protocol stack and exchanges information with each layer of the protocol stack. Specifically, an access interface (that is, an inter-layer interface SAP) may exist between the management entity 104 and each of the foregoing three layers, so that the management entity 140 may exchange information with each layer through the inter-layer interface SAP. The management entity may perform protocol stack cross-layer management. From an implementation perspective, based on a design requirement, alternatively, there may be access interfaces between the management entity and some of the foregoing three layers. This is not specifically limited in this application.

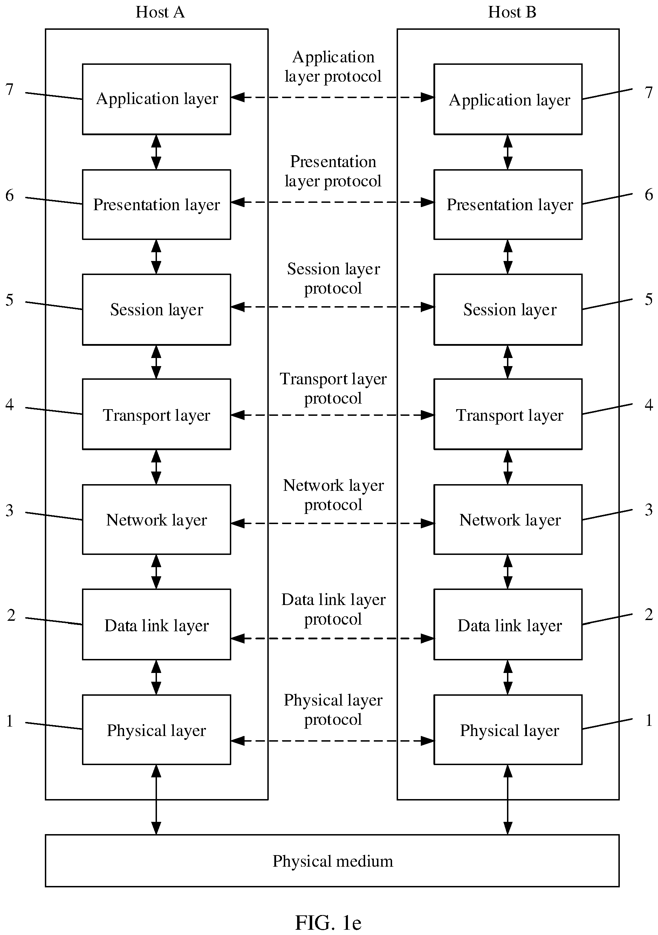

As shown in FIG. 1e, same layers on different terminal devices (for example, a host A and a host B shown in FIG. 1e) are referred to as "peer layers", and communication between peer layers is based on a corresponding layer protocol. Actually, the N^{th} layer in a system does not directly transmit data to the N^{th} layer in another system. Instead, the N^{th} layer directly transmits data and control information to a next layer. This process continues until the information is transmitted to the first layer (that is, the physical layer). Communication actually occurs on a physical medium connecting two peer first layers. That is, a protocol between corresponding layers specifies how the layers construct data and exchange data. As shown in FIG. 1e, a protocol between two peer layers is represented by a dashed line, which means that arrival of data exchanged between the peer layers is not direct and physical, but the data arrives at a corresponding peer layer logically. After being transmitted through layers, the information is transmitted to the physical layer. A physical signal transmission can be achieved only by using a physical medium between two peer physical layers.

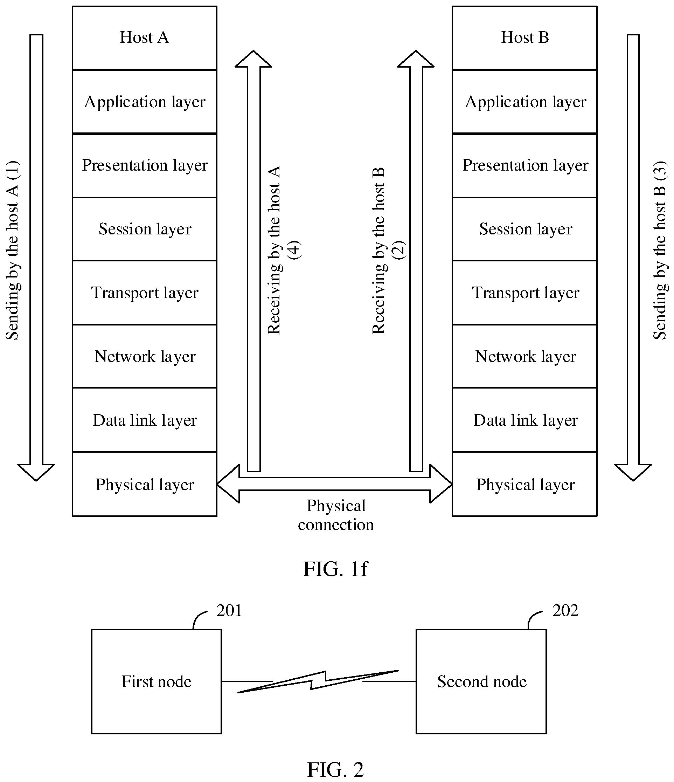

The following process should be understood. Based on the OSI model, for example, when the host A sends user data to the host B, the host A can transmit the user data sent by the host A to the host B by using functions of seven layers, and the host B can receive the user data sent by the host Aby using functions of seven layers. Similarly, for example, the host B sends user data to the host A. The host B sends the user data of the host B to the host A by using the functions of the seven layers, and the host A receives the user data sent by the host B by using the functions of the seven layers. This implementation process may be shown in FIG. 1f.

It should be noted that the physical medium in FIG. 1a to FIG. 1f is a transmission medium, and is not a part of the protocol stack.

The following describes a system architecture and a service scenario in the embodiments of this application. It should be noted that the system architecture and the service scenario described in this application are intended to describe the technical solutions in this application more clearly, and do not constitute a limitation on the technical solutions provided in this application. A person of ordinary skill in the art may know that with evolution of the system architecture and emergence of new service scenarios, the technical solutions provided in this application are also applicable to similar technical problems.

FIG. 2 is a schematic diagram of an architecture of a communication system according to an embodiment of this application. The communication system includes a first node 201 and a second node 202. The first node 201 may establish a connection to and communicate with the second node 202. Optionally, communication between the first node 201 and the second node 202 may be implemented through various types of transmission media, for example, a wireless link such as Wi-Fi, Bluetooth, ZigBee (ZigBee), and the like, or a wired link such as an optical fiber link.

Optionally, the first node 201 may be a primary node or an access point (access point, AP), and correspondingly, the second node 202 is a secondary node. The primary node has a resource scheduling capability. The primary node may schedule a time-frequency resource for the secondary node, the secondary node is subject to scheduling of the primary node, and the secondary node may perform communication by using the time-frequency resource scheduled by the primary node.

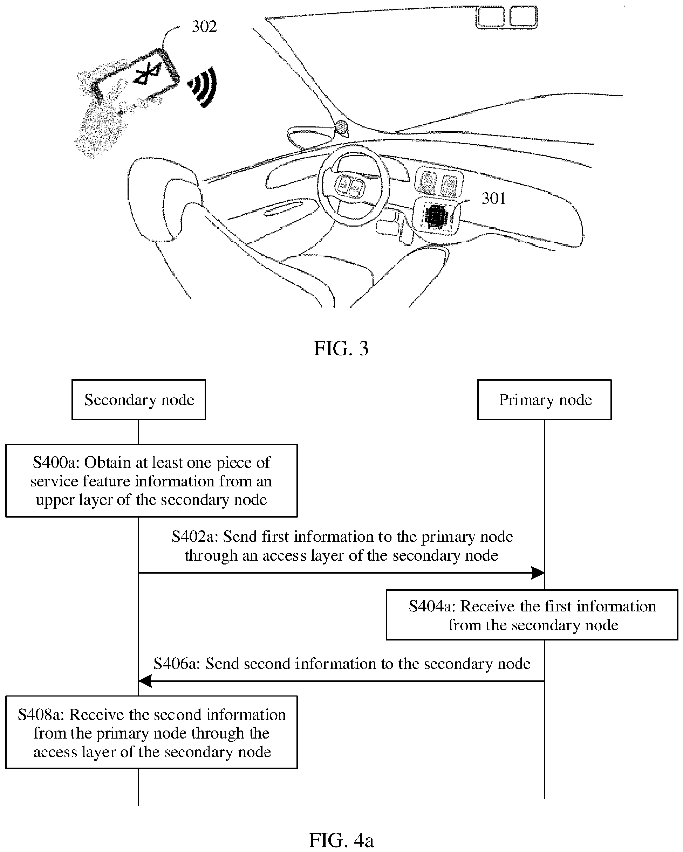

The first node 201 and the second node 202 may be devices of a same type, or may be devices of different types. FIG. 3 is a schematic diagram of an application scenario of a data communication method according to an embodiment of this application. A cockpit domain controller (cockpit domain controller, CDC) 301 is a control center in a smart cockpit device, and may be considered as the first node 201. A smartphone 302 is a portable device with a data receiving and sending capability, and may be considered as the second node 202. The smartphone 302 has a short range communication function (for example, the short range communication function may include one or more of a Bluetooth function, a point-to-point communication function, a Wi-Fi function, a general transmission function, and the like), and the smartphone 302 may establish a connection to the CDC 301 by using a short range communication technology. For example, the smartphone establishes the connection to the CDC 301 by using a Bluetooth technology. The smartphone 302 and the CDC 301 may be connected by enabling a pairing mode or a justwork (justwork) mode. In the justwork mode, by directly tapping a peer identifier, the smartphone 302 and the CDC 301 may be connected by using Bluetooth. Therefore, after the CDC 301 enables Bluetooth, the smartphone 302 may directly tap a Bluetooth name of the CDC 301 to access the CDC 301. In the conventional technologies, in a protocol stack design (for example, an open system interconnect reference model) of a smartphone 302, an upper layer and a lower layer are decoupled, and therefore there is a lack of information exchange between layers. For example, the upper layer is unaware of a lower-layer service, and the lower layer does not learn of a service feature of the upper layer. When resources of the CDC 301 are limited, differentiated Qos of different services in an intelligent cockpit environment cannot be ensured in this implementation. To resolve this problem, this application provides the following method. The following describes in detail the method provided in this application with reference to the accompanying drawings.

FIG. 4a is a schematic flowchart of a data communication method according to an embodiment of this application. The method includes but is not limited to the following steps.

Step S400a: A secondary node obtains at least one piece of service feature information from an upper layer of the secondary node.

In this embodiment of this application, the service feature information is feature information corresponding to a service. Because different services have different features, feature information corresponding to different services may be different.

In embodiments of this application, an upper layer may be understood as a layer above an access layer, and may specifically include at least one of a network and transport layer, a device layer, and an application. As described above, in embodiments of this application, the network and transport layer is configured to establish a connection between a source node and a destination node, and provide a reliable end-to-end data transmission service. Optionally, the network and transport layer may correspond to the network layer and the transport layer in the open system interconnect OSI model defined by the ISO. The device layer is used to provide application support for a user. Optionally, the device layer corresponds to the session layer, the presentation layer, and the application layer in the OSI model. The access layer may provide a communication interface/a communication means for communication between nodes. Optionally, the device layer corresponds to the data link layer and the physical layer in the OSI model.

In an optional embodiment of this application, the at least one piece of service feature information may be determined by the device layer of the secondary node. In an example, the at least one piece of service feature information is transferred from the device layer to the access layer through the network and transport layer, and the at least one piece of service feature information is obtained by the access layer of the secondary node. Specifically, when a structure of a protocol stack in the secondary node is the structure shown in FIG. 1b, for the access layer of the secondary node, a process of obtaining the at least one piece of service feature information of the upper layer of the secondary node may be described as follows. The device layer 101 of the secondary node transfers the at least one piece of service feature information to the network and transport layer 102 through an inter-layer interface SAP between the device layer 101 and the network and transport layer 102; then the at least one piece of service feature information from the device layer 101 is obtained through the network and transport layer 102; and the at least one piece of service feature information is transferred to the access layer 103 through an inter-layer interface between the network and transport layer 102 and the access layer 103. As a result, the at least one piece of service feature information may be obtained by the access layer of the secondary node. For example, when the structure of the protocol stack in the secondary node is the structure shown in FIG. 1c, for the access layer of the secondary node, a process of obtaining the at least one piece of service feature information of the upper layer of the secondary node may be described as follows. The device layer 101 of the secondary node transfers the at least one piece of service feature information to the access layer 103 through an inter-layer interface SAP between the device layer 101 and the access layer 103. As a result, the at least one piece of service feature information can be obtained by the access layer of the secondary node.

In embodiments of this application, an "application" should be understood as a user-oriented system that provides a service for a user. Generally, single application implements one service, and the application may interact with a lower layer through an API (Application Program Interface). Single application/service includes at least one service. It can be understood that the service is a part of the application. In an optional embodiment of this application, the at least one piece of service feature information may be determined by an application of the secondary node. In this case, the application of the secondary node transfers the at least one piece of service feature information to the access layer of the secondary node. For example, an "active noise cancelation" application of the secondary node passes a "sampling frequency" to the access layer of the secondary node. It can be understood that inside the protocol stack of the secondary node, the at least one piece of service feature information is sequentially transferred "from an upper layer to a lower layer" through inter-layer interface SAPs between adjacent layers, and finally transferred to the access layer of the secondary node. In this implementation, a lower layer may learn of service feature information of an upper layer, and therefore the lower layer can provide a specific service for the upper layer. In this way, Qos of different services can be ensured.

In this embodiment of this application, the " at least one" should be understood as "greater than or equal to one", for example, "one", "two", or more.

Step S402a: The secondary node sends first information to a primary node through the access layer of the secondary node, where the first information indicates the at least one piece of service feature information.

In an optional embodiment of this application, the secondary node may use identifier information to represent a service and service feature information corresponding to the service. For example, the service feature information may be indicated by a service feature identifier. For example, "ID1" may represent an "active noise cancelation service"; for another example, "ID2" may represent a "streaming media rearview mirror service". That is, the first information includes at least one identifier of the at least one piece of service feature information.

In this embodiment of this application, one service may include one or more pieces of service feature information. For example, for the active noise cancelation service, the active noise cancelation service may include a plurality of pieces of service feature information such as a sampling frequency and quantization precision of a sample value. The sampling frequency, also referred to as sampling rate or sampling speed, defines a quantity of samples per second taken from a continuous signal to make a discrete signal, and the sampling frequency is represented by Hertz (Hz). A reciprocal of the sampling frequency is sampling period or sampling time, which is a time interval between two samples. Quantization refers to rounding of continuous values (or a large set of possible discrete values) of a signal to a finite set of (or a small set of) discrete values. Generally, quantization is mainly applied to the conversion from a continuous signal to a digital signal. The continuous signal becomes the discrete signal after sampling is applied, and a discrete signal becomes a digital signal after quantization is applied. A quantity of binary bits of the sample value determines the quantization precision of the sample value. Specifically, the "sampling frequency" may be represented by "ID1-001", and the quantization precision of the sample value may be represented by "ID1-002".

For another example, it is assumed that the sampling frequency is 48 kHz or 96 kHz. It can be understood that "ID1-001-01" may represent a 48 kHz sampling rate, and "ID1-001-02" may represent 96 kHz.

For another example, for the streaming media rearview mirror service, the streaming media rearview mirror service may include a plurality of pieces of service feature information such as a frame rate, an image resolution, a compression rate, and a data rate. The frame rate (Frame rate) is a measure used to measure a quantity of displayed frames. A measure unit can be frames per second (Frames per Second, FPS) or Hertz (Hz). In general, FPS is used to describe a quantity of frames played per second in a video, electronic drawing, or gaming, while Hertz is used to describe how many times per second a display is able to draw a new image. The image resolution (Image resolution) refers to a quantity of pixels per inch. Generally, a higher resolution indicates better image quality and display of more details. The compression rate (Compression rate) describes effect of file compression. It is a ratio between an aftercompression size of a file and a before-compression size of the file. For example, if a file of 100 M is compressed into a file of 90 M, a compression rate is 90/100 * 100% = 90%. Generally, the compression rate should be as small as possible. However, a small compression rate indicates a long decompression time. The data rate refers to a required service data transmission rate. For example, to ensure real-time data transmission, a data rate of the active noise cancelation service is 48 kHz (sampling rate) * 10 bit (quantization precision) = 480 kbps. It should be noted that the data rate is different from a data rate of the access layer. Usually, the data rate affects video quality. Specifically, "ID2-001" may represent the "frame rate"; "ID2-002" may represent the "image resolution"; "ID2-003" may represent the "compression rate"; and "ID2-004" may represent the "data rate".

For another example, "ID2-001-01" may indicate that the frame rate is 30 fps, and "ID2-001-02" may indicate that the frame rate is 60 fps.

In this embodiment of this application, the at least one piece of service feature information includes at least one of the sampling frequency, the quantization precision of a sample value, the frame rate, the image resolution, the compression rate, and the data rate.

In this embodiment of this application, the secondary node sends the first information to the primary node through the access layer of the secondary node. Herein, the first information may include the at least one piece of service feature information or the identifier information of the service feature information. Specifically, the primary node obtains the corresponding service feature information based on the first information. For example, the first information sent by the secondary node to the primary node through the access layer of the secondary node is the "sampling frequency". The secondary node may send the "sampling frequency" to the primary node through the access layer of the secondary node. For example, the first information sent by the secondary node to the primary node through the access layer of the secondary node is the "sampling frequency". The secondary node may send the identifier information "ID 1-001" corresponding to the "sampling frequency" to the primary node through the access layer of the secondary node. It can be understood that in this implementation, because the primary node may obtain a correspondence between the service feature information and the identifier information, when the primary node receives the identifier information "ID 1-001" corresponding to the service feature information sent by the secondary node, the primary node may learn, based on the correspondence between the service feature information and the identifier information, that the service feature information corresponding to the identifier information "ID 1-001" is the "sampling frequency".

For example, alternatively, one identifier may indicate different pieces of service feature information. For example, "ID1-005" may indicate that "a frame rate is 30 fps and an image resolution is 1080p"; or "ID1-006" may indicate that "a frame rate is 60 fps and an image resolution is 720p".

Optionally, the correspondence between the service feature information and the identification information may be defined in a protocol or preconfigured. This is not specifically limited in this application.

Step S404a: The primary node receives the first information from the secondary node.

In this embodiment of this application, an implementation process in which the primary node receives the first information from the secondary node may include a step that an access layer of the primary node receives the first information from the secondary node.

Step S406a: The primary node sends second information to the secondary node, where the second information is used for configuring a resource for the secondary node.

In this embodiment of this application, after the access layer of the primary node receives the first information from the secondary node, the access layer of the primary node may perform resource configuration based on the first information. For example, when the first information includes at least one piece of service feature information or identifier information of the service feature information, the primary node may configure a corresponding resource for the secondary node based on the at least one piece of service feature information. For example, when the service feature information is a sampling frequency, the primary node may configure, for the secondary node based on the "sampling frequency", a resource for an active noise cancelation service to be initiated by the secondary node. For another example, when the service feature information is a frame rate, the primary node may configure, for the secondary node based on the frame rate, a resource for a streaming media rearview mirror service to be initiated by the secondary node.

It can be understood that the access layer of the primary node performs resource configuration based on the first information, and sends the second information to the secondary node.

Step S408a: The secondary node receives the second information from the primary node through the access layer of the secondary node.

In this embodiment of this application, the secondary node may obtain the service feature information from the upper layer of the secondary node, and then the lower layer can learn of the service feature information of the upper layer. Therefore, the lower layer can provide a specific service for the upper layer. In this way, Qos of different services can be ensured.

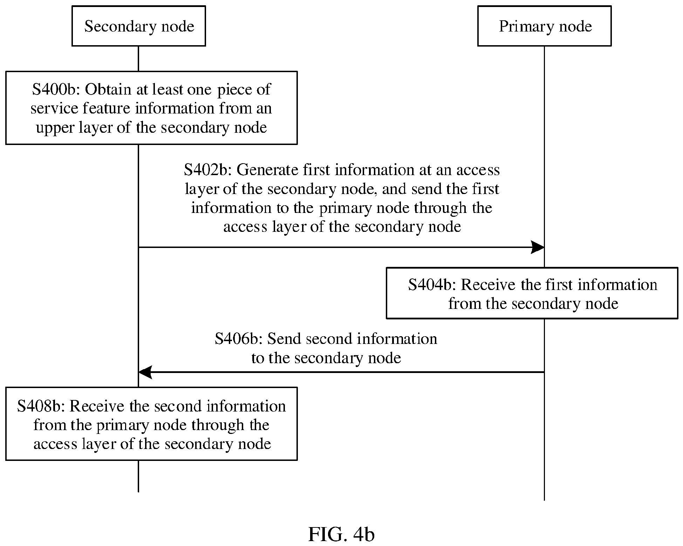

A first service is used as an example. Based on the method shown in FIG. 4a, in addition to the at least one piece of service feature information, the first information sent from the access layer of the secondary node to the primary node may further include at least one of first access layer Qos information or a first application identifier that are generated by the access layer of the secondary node. The following specifically describes how the primary node configures a resource based on the first information sent by the primary node. As shown in FIG. 4b, the method may include, but is not limited to, the following steps.

Step S400b: The secondary node obtains the at least one piece of service feature information from the upper layer of the secondary node.

Step S402b: Generate the first information at the access layer of the secondary node, and send the first information to the primary node through the access layer of the secondary node, where besides the at least one piece of service feature information or the identifier information of the service feature information, the first information further includes at least one of the first access layer Qos information and the first application identifier, and at least one of the first access layer Qos information and the first application identifier corresponds to the first service.

In this embodiment of this application, the first access layer Qos information may include at least one of first access layer priority information, first access layer reliability information, and a first Qos identifier.

In an actual application, the first service may be indicated by the first access layer Qos information. For example, if different services correspond to different pieces of access layer Qos information, the different services can be distinguished based on the access layer Qos information.

In this embodiment of this application, the first access layer priority information represents a priority of the first service. Because different services have different Qos requirements, at the access layer, different services are of different priorities. In this way, the access layer can process the services with different Qos requirements in a differentiated manner. For example, a value may represent a priority of a service. For example, a larger value indicates a higher priority of the service. For example, a smaller value indicates a higher priority of the service. In this embodiment of this application, for ease of description, the following agreement is made: A larger value indicates a higher priority of the service. For example, for the active noise cancelation service, an access layer priority corresponding to the active noise cancelation service may be 1 (it is assumed that 1 is the highest priority); and for the streaming media rearview mirror service, an access layer priority corresponding to the streaming media rearview mirror service is 2. Therefore, when the access layer processes the foregoing two services, the access layer preferentially processes the active noise cancelation service.

Generally, in this embodiment of this application, the first access layer priority information may be an index, an identifier, or a priority used to indicate the first access layer priority. A form of the first access layer priority information is not specifically limited in this application.

In this embodiment of this application, the first access layer reliability information represents a transmission reliability requirement of the first service. Generally, different services may have different access layer reliability transmission requirements. For example, a transmission reliability requirement of the active noise cancelation service is 99.99%. For another example, a transmission reliability requirement of the streaming media rearview mirror service is 99.9999%.

In this embodiment of this application, the first access layer reliability information may include, but is not limited to, an index, an identifier, or information itself.

In this embodiment of this application, the first Qos identifier represents a Qos requirement corresponding to the first service. Specifically, the first Qos identifier may be associated with a Qos requirement. For example, the Qos identifier can be determined based on the Qos requirement, or the Qos requirement can be determined based on the Qos identifier. The Qos requirement may include at least one of access layer reliability, an access layer priority, an access layer delay, a communication rate, and a communication distance.

For example, the Qos requirement may be a Qos requirement shown in Table 1. However, a person skilled in the art may know that Table 1 is merely a possible form of a correspondence, and a quantity of and types of parameters in the table and specific values of the parameters may be modified. In addition, in specific product implementation, a manner of storing or obtaining the correspondence is not specifically limited as long as a product can obtain the correspondence.

**Table 1**

| | Access layer reliability | Access layer priority | Communication rate |
|---|---|---|---|
| Qos ID1 | Level 1 | Level 2 | Rate level 1 |
| Qos ID2 | Level 1 | / | Rate level 2 |
| Qos ID3 | Level 3 | Level 2 | / |

In this embodiment of this application, a service is classified into different levels. For example, the streaming media rearview mirror service may be classified into different levels. For example, the streaming media rearview mirror service is classified into a low-definition streaming media rearview mirror service and a highdefinition streaming media rearview mirror service. The two services are different. To distinguish between the two different services, AIDs and access layer priorities may be used, or different Qos IDs are used, or combinations of AID+Qos ID are used.

In this embodiment of this application, the first application identifier indicates the first service. For example, if the first service is the active noise cancelation service, an AID (Application ID) 1 may be used to identify the active noise cancelation service. For another example, if the first service is a streaming media rearview mirror service, an AID 2 may be used to identify the streaming media rearview mirror service.

In a possible implementation, the first application identifier may also be from an upper-layer protocol stack.

Step S404b: The primary node receives the first information from the secondary node.

In this embodiment of this application, after the access layer of the primary node receives the first information from the secondary node, the access layer of the primary node may perform resource configuration based on the first information.

In an example, when the first information includes the first access layer Qos information besides the at least one piece of service feature information or the identifier information of the service feature information, and the first access layer Qos information includes the first access layer priority information, the primary node may configure a resource for the secondary node based on the service feature information and the access layer priority.

In an example, when the first information includes the first access layer Qos information besides the at least one piece of service feature information or the identifier information of the service feature information, and the first access layer Qos information includes the first access layer reliability information, the primary node may configure a resource for the secondary node based on the service feature information and the access layer reliability information.

In an example, when the first information includes the first access layer Qos information besides the at least one piece of service feature information or the identifier information of the service feature information, and the first access layer Qos information includes the first Qos identifier, the primary node may configure a resource for the secondary node based on the service feature information and the Qos identifier.

In an example, when the first information includes the first application identifier besides the at least one piece of service feature information or the identifier information of the service feature information, the primary node may configure a resource for the secondary node based on the service feature information and the application identifier.

It should be noted that when the primary node receives the first information sent by a plurality of secondary nodes, the primary node may configure a resource for each secondary node by using a resource scheduling algorithm. For an implementation in which the primary node configures a resource for each secondary node by using the resource scheduling algorithm, refer to the conventional technologies. Details are not described herein again.

Step S406b: The primary node sends the second information to the secondary node, where the second information is used for configuring a resource for the secondary node.

Optionally, the resource is used for the first service.

Step S408b: The secondary node receives the second information from the primary node through the access layer of the secondary node.

In this implementation, in addition to obtaining the at least one piece of service feature information of the upper layer of the secondary node, the access layer of the secondary node may further generate at least one of the first access layer Qos information and the first application identifier at the access layer. In this case, the access layer of the secondary node may send, to the primary node, the first information that includes upper layer information and access layer information, so that the primary node can configure a specific resource based on the first information. In this implementation, resource configuration efficiency can be improved.

The foregoing embodiment describes resource configuration performed by the primary node based on the first information sent by the secondary node. Another embodiment in this application further describes how a secondary node generates a corresponding data packet based on third information sent by a primary node. In this embodiment of this application, the third information may be determined by the primary node based on a hardware resource available capability of a current system. Specifically, the hardware resource available capability of the primary node includes, but is not limited to, a computing capability and/or a storage capability of the primary node, where the computing capability is related to processor performance of the primary node, the storage capability is related to the storage performance of the primary node. This embodiment may include the following three scenarios, which are described below in detail.

The primary node first determines at least one piece of service feature information. Specifically, the primary node may determine the at least one piece of service feature information based on the hardware resource capability or other possible information, to notify the secondary node of the at least one piece of service feature information. This step is optional.

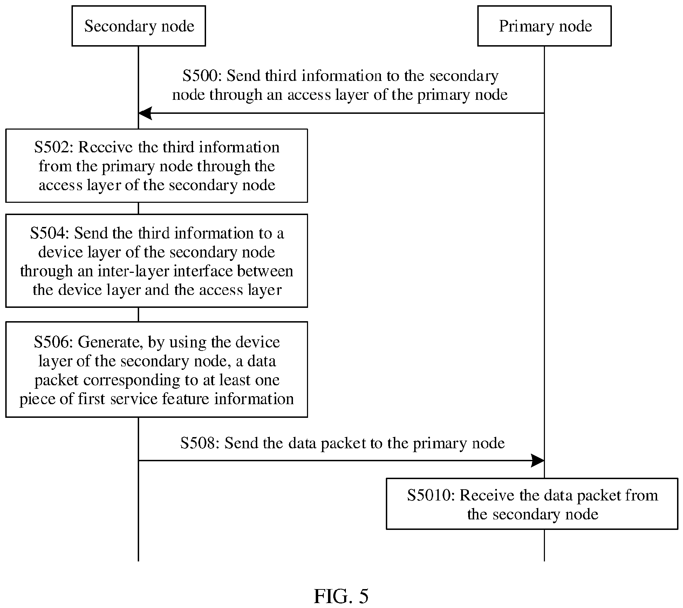

In an example, when a structure of a protocol stack in the secondary node is the structure shown in FIG. 1c, as shown in FIG. 5, the method may include, but is not limited to, the following steps.

Step S500: The primary node sends the third information to the secondary node through an access layer of the primary node, where the third information indicates the at least one piece of first service feature information.

In a possible implementation, an implementation process in which the primary node sends the third information to the secondary node through the access layer of the primary node may include a step that the primary node generates the third information at the access layer of the primary node, and sends the third information to the secondary node through the access layer of the primary node.

Step S502: The secondary node receives the third information from the primary node through the access layer of the secondary node.

Step S504: The secondary node sends the third information to a device layer through an inter-layer interface SAP between the device layer and an access layer of the secondary node.

Step S506: The secondary node generates, by using the device layer of the secondary node, a data packet corresponding to the at least one piece of first service feature information.

Step S508: The secondary node sends the data packet to the primary node.

In this embodiment of this application, the secondary node generates, by using the device layer of the secondary node, the data packet corresponding to the at least one piece of first service feature information. Then, based on the foregoing described process in which the host A sends the data packet, it can be learned that the device layer of the secondary node transfers the generated data packet corresponding to the first service feature information to the access layer through the inter-layer interface SAP between the device layer and the access layer, and then the secondary node sends the data packet to the primary node through the access layer of the secondary node.

Step S5010: The primary node receives the data packet from the secondary node.

In this embodiment of this application, an implementation process in which the primary node receives the data packet from the secondary node may include a step that the access layer of the primary node receives the data packet sent by the access layer of the secondary node. Optionally, the access layer of the primary node transfers the data packet to a device layer of the primary node through an inter-layer interface SAP between the device layer and the access layer of the primary node, so that the primary node can implement a process of receiving the data packet.

During implementation of this embodiment of this application, the secondary node may generate the corresponding data packet based on the third information sent by the primary node, and then the secondary node sends the generated data packet to the primary node. In this implementation, the primary node specifically adjusts service feature information of the secondary node based on resources of the primary node.

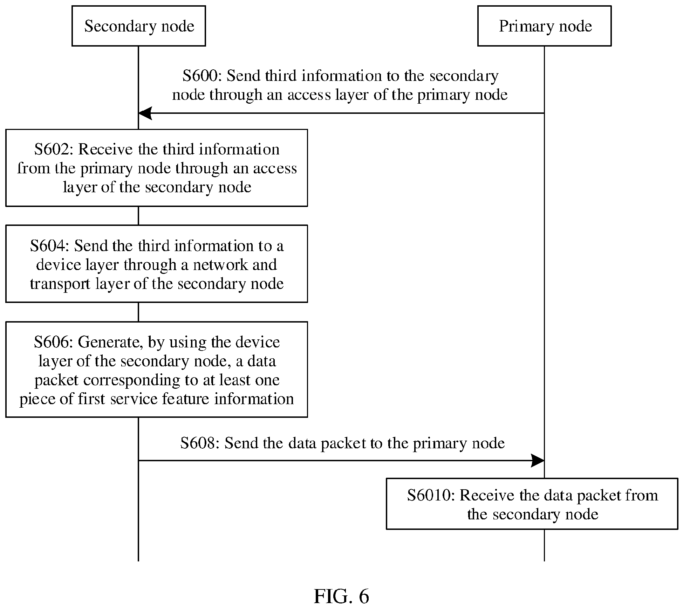

In an example, when the structure of the protocol stack in the secondary node is the structure shown in FIG. 1b, as shown in FIG. 6, the method may include, but is not limited to, the following steps.

Step S600: The primary node sends the third information to the secondary node through the access layer of the primary node, where the third information indicates the at least one piece of first service feature information.

In a possible implementation, an implementation process in which the primary node sends the third information to the secondary node through the access layer of the primary node may include a step that the primary node generates the third information at the access layer of the primary node, and sends the third information to the secondary node through the access layer of the primary node.

Step S602: The secondary node receives the third information from the primary node through the access layer of the secondary node.

Step S604: The secondary node sends the third information to the device layer through a network and transport layer of the secondary node.

In this embodiment of this application, the secondary node sends the third information to the network and transport layer through an inter-layer interface between the access layer and the network and transport layer of the secondary node, and then the secondary node sends the third information to the device layer through an inter-layer interface between the network and transport layer and the device layer of the secondary node.

Step S606: The secondary node generates, by using the device layer of the secondary node, the data packet corresponding to the at least one piece of first service feature information.

Step S608: The secondary node sends the data packet to the primary node.

In this embodiment of this application, the secondary node generates, by using the device layer of the secondary node, the data packet corresponding to the at least one piece of first service feature information. Then, based on the foregoing described process in which the host A sends the data packet, it can be learned that the device layer of the secondary node transfers the generated data packet corresponding to the first service feature information to the network and transport layer through the inter-layer interface SAP between the device layer and the network and transport layer; the network and transport layer of the secondary node transfers the generated data packet corresponding to the first service feature information to the access layer through an inter-layer interface SAP between the network and transport layer and the access layer of the secondary node; and then the secondary node sends the data packet to the primary node through the access layer of the secondary node.

Step S6010: The primary node receives the data packet from the secondary node.

In this embodiment of this application, an implementation process in which the primary node receives the data packet from the secondary node may include a step that the primary node receives, through the access layer of the primary node, the data packet sent by the access layer of the secondary node. Optionally, the access layer of the primary node transfers the data packet to the network and transport layer through an inter-layer interface SAP between the access layer and the network and transport layer of the primary node, and then the network and transport layer of the primary node transfer the data packet to the device layer of the primary node through the inter-layer interface SAP between the network and transport layer and the device layer of the primary node, so that the primary node can implement the process of receiving the data packet.

During implementation of this embodiment of this application, the secondary node may generate the corresponding data packet based on the third information sent by the primary node, and then the secondary node sends the generated data packet to the primary node. In this implementation, the primary node specifically adjusts service feature information of the secondary node based on limited resources of the primary node.

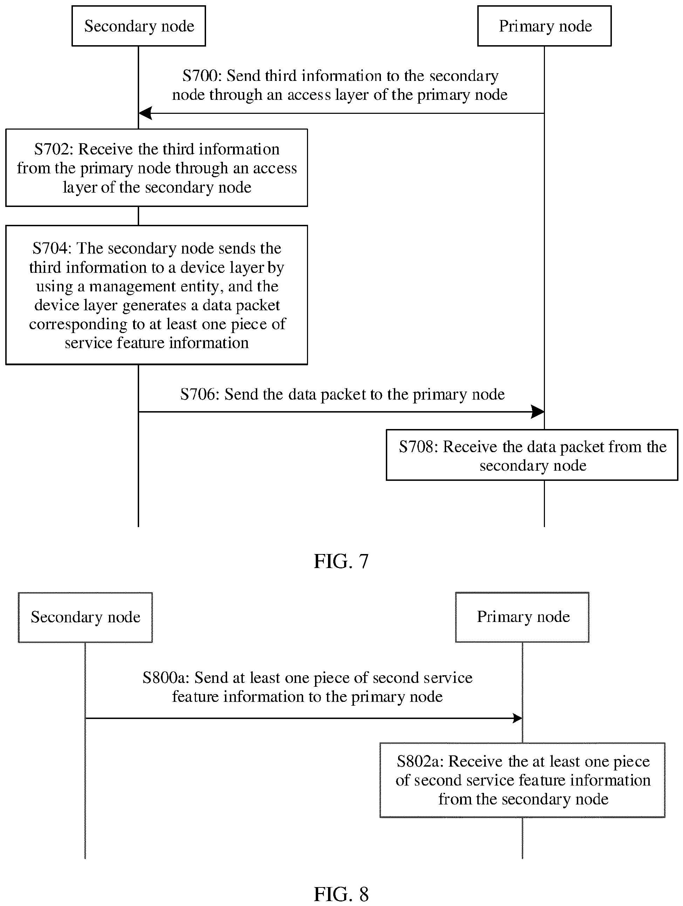

In an example, when the structure of the protocol stack in the secondary node is the structure shown in FIG. 1d, as shown in FIG. 7, the method may include, but is not limited to, the following steps.

Step S700: The primary node sends the third information to the secondary node through the access layer of the primary node, where the third information indicates the at least one piece of first service feature information.

In a possible implementation, an implementation process in which the primary node sends the third information to the secondary node through the access layer of the primary node may include a step that the primary node generates the third information at the access layer of the primary node, and sends the third information to the secondary node through the access layer of the primary node.

Step S702: The secondary node receives the third information from the primary node through the access layer of the secondary node.

Step S704: The secondary node sends the third information to the device layer through a management entity, and the device layer generates the data packet corresponding to at least one piece of service feature information.

Step S706: The secondary node sends the data packet to the primary node.

In an example, when protocol stack structures of the secondary node and the primary node include the access layers and the device layers, an implementation process in which the secondary node sends the data packet to the primary node may include the following steps. The device layer of the secondary node transfers the generated data packet corresponding to the first service feature information to the access layer through the inter-layer interface SAP between the device layer and the access layer, and then the secondary node sends the data packet to the primary node through the access layer of the secondary node.

In an example, when protocol stack structures of the secondary node and the primary node include the access layers, the network and transport layers, and the device layers, an implementation process in which the secondary node sends the data packet to the primary node may include the following steps. The device layer of the secondary node transfers the generated data packet corresponding to the first service feature information to the network and transport layer through the inter-layer interface SAP between the device layer and the network and transport layer; the network and transport layer of the secondary node transfers the generated data packet corresponding to the first service feature information to the access layer through the inter-layer interface SAP between the network and transport layer and the access layer of the secondary node; and then the secondary node sends the data packet to the primary node through the access layer of the secondary node.

Step S708: The primary node receives the data packet from the secondary node.

Specifically, the primary node receives, through the access layer of the primary node, the data packet sent by the access layer of the secondary node.

In an example, when protocol stack structures of the secondary node and the primary node include the access layers and the device layers, an implementation process in which the primary node receives the data packet from the secondary node may include a step that the primary node receives, through the access layer of the primary node, the data packet sent by the access layer of the secondary node. Optionally, the access layer of the primary node transfers the data packet to the device layer of the primary node through the inter-layer interface SAP between the device layer and the access layer of the primary node, so that the primary node can implement a process of receiving the data packet.

In an example, when protocol stack structures of the secondary node and the primary node include the access layers, the network and transport layers, and the device layers, an implementation process in which the primary node receives the data packet from the primary node may include a step that the primary node receives, through the access layer of the primary node, the data packet sent by the access layer of the secondary node. Optionally, the access layer of the primary node transfers the data packet to the network and transport layer through the inter-layer interface SAP between the access layer and the network and transport layer of the primary node, and then the network and transport layer of the primary node transfer the data packet to the device layer of the primary node through the inter-layer interface SAP between the network and transport layer and the device layer of the primary node, so that the primary node can implement the process of receiving the data packet.

During implementation of this embodiment of this application, the secondary node may generate the corresponding data packet based on the third information sent by the primary node. In this implementation, the primary node specifically adjusts service feature information of the secondary node based on resources of the primary node. Consequently, while service performance is ensured, smart cockpit domain resource utilization can be optimized.

In some possible implementations, before the method steps in any one of the method embodiments shown in FIG. 5, FIG. 6, and FIG. 7 are performed, the method may further include steps S800a to S802a as shown in FIG. 8. This embodiment describes a step that the primary node receives at least one piece of second service feature information sent by the secondary node, and the primary node performs resource configuration based on the second service feature information. However, when the primary node performs resource configuration based on the second service feature information, if the primary node determines that a current system resource (for example, the current system resource may be a remaining available resource of a system, or may be a hardware resource available capability) cannot ensure Qos of a service corresponding to the second service feature information, the primary node may adjust the second service feature information, for example, adjust the second service feature information to the first service feature information, to ensure Qos of the service. Steps S800a to S802a are described in detail below.

Step S800a: The secondary node sends the at least one piece of second service feature information to the primary node.

In this embodiment of this application, the secondary node sends the at least one piece of second service feature information to the primary node through the access layer of the secondary node.

In this embodiment of this application, the first service feature information and the second service feature information are different pieces of service feature information. For example, the first service feature information is "a frame rate is 30 fps, and an image resolution is 720p", and the second service feature information is "a frame rate is 60 fps, and an image resolution is 720p".

Step S802a: The primary node receives the at least one piece of second service feature information from the secondary node.

In this embodiment of this application, the primary node receives the at least one piece of second service feature information from the secondary node through the access layer of the primary node.

In an optional embodiment of this application, after step S802a is performed, steps S500 to S5010 may be further performed. In an optional embodiment of this application, after step S802a is performed, steps S600 to S6010 may be further performed. In an optional embodiment of this application, after step S802a is performed, steps S700 to S708 may be further performed. In this implementation, the primary node receives the at least one piece of second service feature information sent by the secondary node, and the primary node performs resource configuration based on the second service feature information. However, when the primary node performs resource configuration based on the second service feature information, if the primary node determines that a current system resource cannot ensure the Qos of the service corresponding to the second service feature information, the primary node may adjust the second service feature information, for example, adjust the second service feature information to the first service feature information, and generate a corresponding data packet based on the first service feature information. In this implementation, the primary node specifically adjusts service feature information of the secondary node based on resources of the primary node. Consequently, while service performance is ensured, smart cockpit domain resource utilization can be optimized.

In some possible implementations, on the basis of any one of the method embodiments shown in FIG. 5, FIG. 6, and FIG. 7, the method may further include step S800b. The following describes step S800b in detail.

Step S800b: The primary node obtains at least one piece of service feature information from the device layer of the primary node.

In an example, when the structure of the protocol stack in the primary node is the structure shown in FIG. 1c, an implementation process in which the primary node obtains the at least one piece of service feature information from the device layer of the primary node may include obtaining the at least one piece of service feature information from the device layer of the primary node through the inter-layer interface SAP between the device layer and the access layer of the primary node.

In an example, when the structure of the protocol stack in the primary node is the structure shown in FIG. 1b, an implementation process in which the primary node obtains the at least one piece of service feature information from the device layer of the primary node may include obtaining the at least one piece of service feature information from the device layer of the primary node through the network and transport layer.

In an example, when the structure of the protocol stack in the primary node is the structure shown in FIG. 1d, an implementation process in which the primary node obtains the at least one piece of service feature information from the device layer of the primary node may include obtaining the at least one piece of service feature information from the device layer of the primary node through an inter-layer interface SAP between a management entity and the access layer.

It should be noted that, in this embodiment of this application, the service feature information transferred between different layers of the secondary node (or the primary node) may be the service feature information itself, or may be the identifier information corresponding to the service feature information. When the secondary node communicates with the primary node, for example, when information is received or sent, the information may be service feature information itself, or may be identifier information corresponding to the service feature information.

The foregoing describes in detail the methods provided in embodiments of this application. The following specifically describes a related apparatus in this application.

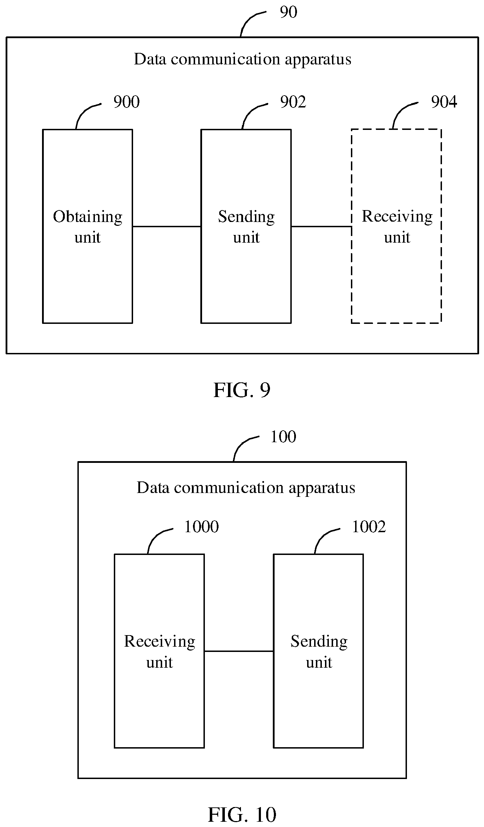

Refer to FIG. 9. FIG. 9 is a schematic diagram of a structure of a data communication apparatus 90 according to an embodiment of this application. The apparatus 90 may be an electronic device with a data receiving and sending capability, or may be a component in the electronic device with the data receiving and sending capability, for example, a chip or an integrated circuit. The apparatus 90 may include an obtaining unit 900 and a sending unit 902. Optionally, the apparatus may include a receiving unit 904. Descriptions of the units are as follows.

The obtaining unit 900 is configured to obtain at least one piece of service feature information from an upper layer of a secondary node.

The sending unit 902 is configured to send first information to a primary node through an access layer of the secondary node, where the first information indicates the at least one piece of service feature information.

In a possible implementation, the sending unit 902 is specifically configured to: generate the first information at the access layer of the secondary node, and send the first information to the primary node through the access layer.

In a possible implementation, the upper layer includes at least one of a network and transport layer, a device layer, and an application.

In a possible implementation, the first information includes the at least one piece of service feature information or identifier information of the service feature information.

In a possible implementation, the apparatus 90 further includes: the receiving unit 904, configured to receive second information from the primary node through the access layer of the secondary node, where the second information is used for configuring a resource for the secondary node, and the resource is used for at least one service.

In a possible implementation, the first information further includes at least one of first access layer Qos information and a first application identifier, at least one of the first access layer Qos information and the first application identifier corresponds to a first service, and the resource is used for the first service.

In a possible implementation, the first access layer Qos information includes at least one of first access layer priority information, first access layer reliability information, and a first Qos identifier.

In a possible implementation, the resource corresponds to the at least one piece of service feature information.

In a possible implementation, the at least one piece of service feature information includes at least one of sampling frequency, quantization precision of a sample value, a frame rate, an image resolution, a compression rate, and a data rate.

In a possible implementation, the upper layer is the device layer, and the obtaining unit 900 is specifically configured to obtain the at least one piece of service feature information through an inter-layer interface SAP between the device layer and the access layer.

In a possible implementation, the upper layer is the device layer, and the obtaining unit 900 is specifically configured to obtain the at least one piece of service feature information from the device layer through the network and transport layer, where the network and transport layer is between the device layer and the access layer.

It should be noted that for specific implementations of the foregoing functional units, reference should be made to related descriptions in the foregoing method embodiments. Details are not described again in this embodiment of this application.

Refer to FIG. 10. FIG. 10 is a schematic diagram of a structure of another data communication apparatus 100 according to an embodiment of this application. The apparatus 10 may be an electronic device with a data receiving and sending capability, or may be a component in the electronic device with the data receiving and sending capability, for example, a chip or an integrated circuit. The apparatus 10 may include a receiving unit 1000 and a sending unit 1002. Descriptions of the units are as follows.

The receiving unit 1000 is configured to receive first information from a secondary node, where the first information indicates at least one piece of service feature information.

The sending unit 1002 is configured to send second information to the secondary node, where the second information is used for configuring a resource for the secondary node, and the resource corresponds to the at least one piece of service feature information.

In a possible implementation, the first information includes the at least one piece of service feature information or identifier information of the service feature information.

In a possible implementation, the first information further includes at least one of first access layer Qos information and a first application identifier, at least one of the first access layer Qos information and the first application identifier corresponds to a first service, and the resource is used for the first service.

In a possible implementation, the first access layer Qos information includes at least one of first access layer priority information, first access layer reliability information, and a first Qos identifier.

In a possible implementation, the sending unit 1002 is specifically configured to: send the second information to the secondary node through an access layer of the primary node.

In a possible implementation, the at least one piece of service feature information includes at least one of sampling frequency, quantization precision of a sample value, a frame rate, an image resolution, a compression rate, and a data rate.

It should be noted that for specific implementations of the foregoing functional units, reference should be made to related descriptions in the foregoing method embodiments. Details are not described again in this embodiment of this application.

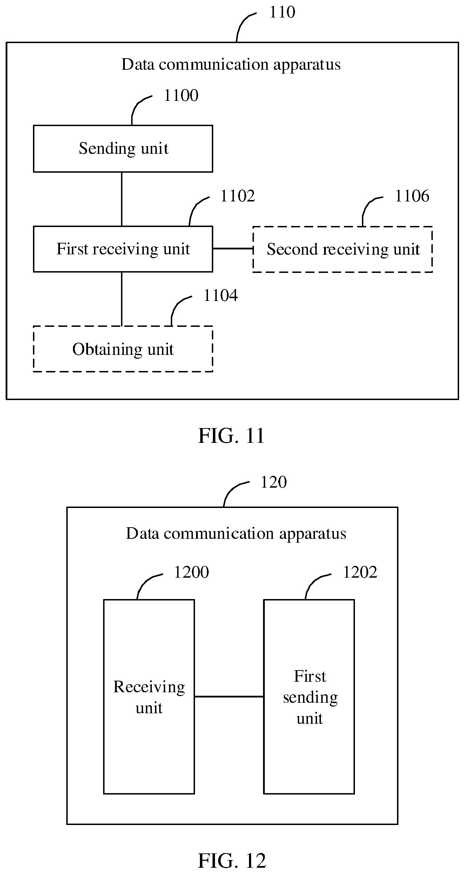

Refer to FIG. 11. FIG. 11 is a schematic diagram of a structure of another data communication apparatus 110 according to an embodiment of this application. The apparatus 110 may be an electronic device with a data receiving and sending capability, or may be a component in the electronic device with the data receiving and sending capability, for example, a chip or an integrated circuit. The apparatus 110 may include a sending unit 1100, a first receiving unit 1102, an obtaining unit 1104, and a second receiving unit 1106. Optionally, the apparatus may include the obtaining unit 1104 and a second receiving unit 1106. Descriptions of the units are as follows.

The sending unit 1100 is configured to send third information to a secondary node through an access layer of a primary node, where the third information indicates at least one piece of first service feature information.

The first receiving unit 1102 is configured to receive a data packet from the secondary node, where the data packet corresponds to the at least one piece of service feature information.

In a possible implementation, the sending unit 1100 is specifically configured to: generate the third information at the access layer of the primary node, and send the third information to the secondary node through the access layer.

In a possible implementation, the apparatus 110 further includes: the obtaining unit 1104, configured to obtain the at least one piece of service feature information from a device layer of the primary node.

In a possible implementation, the obtaining unit 1104 is specifically configured to obtain the at least one piece of service feature information from the device layer of the primary node through an inter-layer interface SAP between the device layer and the access layer of the primary node.

In a possible implementation, the obtaining unit 1104 is specifically configured to obtain the at least one piece of service feature information from the device layer of the primary node through a network and transport layer, where the network and transport layer is between the device layer and the access layer.

In a possible implementation, the obtaining unit 1104 is specifically configured to obtain the at least one piece of service feature information from the device layer of the primary node through an inter-layer interface SAP between a management entity and the access layer.

In a possible implementation, the apparatus 110 further includes: the second receiving unit 1106, configured to receive at least one piece of second service feature information from the primary node.

It should be noted that for specific implementations of the foregoing functional units, reference should be made to related descriptions in the foregoing method embodiments. Details are not described again in this embodiment of this application.

Refer to FIG. 12. FIG. 12 is a schematic diagram of a structure of another data communication apparatus 120 according to an embodiment of this application. The apparatus 120 may be an electronic device with a data receiving and sending capability, or may be a component in the electronic device with the data receiving and sending capability, for example, a chip or an integrated circuit. The apparatus 120 may include a receiving unit 1200 and a first sending unit 1202. Optionally, the apparatus 120 may include a second sending unit 1204, a third sending unit 1206, a fourth sending unit 1208, a first generation unit 1210, and a second generation unit 1212. It should be noted herein that division into the foregoing plurality of units is merely logical division based on functions, and is not intended to limit a specific structure of the apparatus 120. In specific implementation, some functional modules may be further divided into more fine functional modules, and some functional modules may be combined into one functional module. However, regardless of whether the functional modules are further divided or combined, general procedures performed by the apparatus 120 in a data communication process are the same. For example, the plurality of units may alternatively be converted into a communication unit and a processing unit, and the communication unit is configured to implement a function of the receiving unit 1200. Usually, each unit corresponds to program code (or a program instruction). When the program code corresponding to the unit is run on a processor, the unit executes a corresponding procedure to implement a corresponding function. Descriptions of the units are as follows.

The receiving unit 1200 is configured to receive third information from a primary node through an access layer of a secondary node, where the third information indicates at least one piece of first service feature information.

The first sending unit 1202 is configured to send a data packet to the primary node, where the data packet corresponds to the at least one piece of service feature information.

In a possible implementation, the apparatus 120 further includes: the second sending unit 1204, configured to send at least one piece of second service feature information to the primary node.

In a possible implementation, the apparatus 120 further includes: the third sending unit 1206, configured to send the third information to a device layer of the secondary node through an inter-layer interface SAP between the device layer and an access layer.

In a possible implementation, the apparatus 120 further includes: the fourth sending unit 1208, configured to send the third information to a device layer through a network and transport layer of the secondary node, where the network and transport layer is between the device layer and an access layer.

In a possible implementation, the apparatus 120 further includes: the first generation unit 1210, configured to generate, by using a device layer, the data packet corresponding to the at least one piece of service feature information.

In a possible implementation, the apparatus 120 further includes: the second generation unit 1212, configured to send the third information to a device layer by using a management entity; and generate, by using the device layer, the data packet corresponding to the at least one piece of service feature information.

It should be noted that for specific implementations of the foregoing functional units, reference should be made to related descriptions in the foregoing method embodiments. Details are not described again in this embodiment of this application.

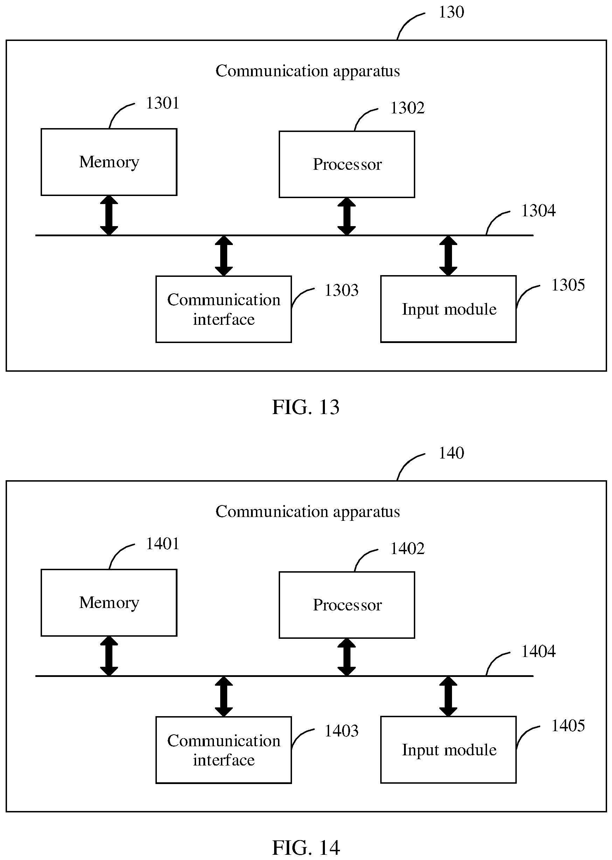

Refer to FIG. 13. FIG. 13 is a schematic diagram of a structure of a communication apparatus according to an embodiment of this application. The communication apparatus 130 may be an electronic device with a data receiving and sending capability, for example, a secondary node, or may be a component in the electronic device with the data receiving and sending capability, for example, a chip or an integrated circuit in the secondary node. The communication apparatus 130 may include a memory 1301, at least one processor 1302, and a communication interface 1303. Optionally, a bus 1304 may be further included. The memory 1301, the processor 1302, and the communication interface 1303 are connected by the bus 1304.

The memory 1301 is configured to provide storage space, and the storage space may store data such as an operating system and a computer program. The memory 1301 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

The at least one processor 1302 is a module that performs an arithmetic operation and a logical operation, and may be any one of processing modules such as a central processing unit (Central Processing Unit, CPU), a graphics processing unit (graphics processing unit, GPU), a microprocessor unit (microprocessor unit, MPU), a field-programmable gate array (Field-Programmable Gate Array, FPGA), an application specific integrated circuit (Application Specific Integrated Circuit, ASIC), or may be a combination thereof. With reference to the solutions of this application, in an example, information transferred between different layers in the communication apparatus 130 may be controlled by one same processor 1302. In an example, information transferred between different layers in the communication apparatus 130 may be controlled by a plurality of processors based on one same protocol definition.

The communication interface 1303 is configured to receive data sent by an external device and/or send data to an external device, and may be a wired link interface such as an Ethernet cable, or may be a wireless (for example, Wi-Fi, Bluetooth, or general wireless transmission technologies) link interface. Optionally, the communication interface 1303 may further include a transmitter (for example, a radio frequency transmitter or an antenna), a receiver, or the like coupled to the interface.

The processor 1302 in the communication apparatus 130 is configured to read computer program code stored in the memory 1301, to perform the following operations:
obtaining at least one piece of service feature information from an upper layer of a secondary node; and
controlling an access layer of the secondary node to send first information to a primary node through the communication interface 1303, where the first information indicates the at least one piece of service feature information.

The controlling, by the processor 1302, an access layer of the secondary node to send first information to a primary node through the communication interface 1303 may include: generating the first information at the access layer of the secondary node, and controlling the access layer to send the first information to the primary node through the communication interface 1303.

An upper layer includes at least one of a network and transport layer, a device layer, and an application.

The first information includes the at least one piece of service feature information or identifier information of the service feature information.

The processor 1302 may be further configured to control the access layer of the secondary node to receive second information from the primary node through the communication interface 1303, where the second information is used for configuring a resource for the secondary node, and the resource is used for at least one service.

The first information further includes at least one of first access layer Qos information and a first application identifier, at least one of the first access layer Qos information and the first application identifier corresponds to a first service, and the resource is used for the first service.

The first access layer Qos information includes at least one of first access layer priority information, first access layer reliability information, and a first Qos identifier.

The resource corresponds to the at least one piece of service feature information.

The at least one piece of service feature information includes at least one of sampling frequency, quantization precision of a sample value, a frame rate, an image resolution, a compression rate, and a data rate.

The upper layer is the device layer, and the obtaining, by the processor 1302, at least one piece of service feature information from an upper layer of a secondary node may include: obtaining the at least one piece of service feature information through an inter-layer interface SAP between the device layer and the access layer.

The upper layer is the device layer, and the obtaining, by the processor 1302, at least one piece of service feature information from an upper layer of a secondary node may include: obtaining the at least one piece of service feature information from the device layer through the network and transport layer.

It should be noted that for specific implementations of the foregoing functional components, reference should be made to related descriptions in the foregoing method embodiments. Details are not described again in this embodiment of this application.

Refer to FIG. 14. FIG. 14 is a schematic diagram of a structure of a communication apparatus according to an embodiment of this application. The communication apparatus 140 may be an electronic device with a data receiving and sending capability, for example, a primary node, or may be a component in the electronic device with the data receiving and sending capability, for example, a chip or an integrated circuit in the primary node. The communication apparatus 140 may include a memory 1401, a processor 1402, and a communication interface 1403. Optionally, a bus 1404 may be further included. The memory 1401, the at least one processor 1402, and the communication interface 1403 are connected by the bus 1404.

The memory 1401 is configured to provide storage space, and the storage space may store data such as an operating system and a computer program. The memory 1401 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

The at least one processor 1402 is a module that performs an arithmetic operation and a logical operation, and may be any one of processing modules such as a central processing unit (Central Processing Unit, CPU), a graphics processing unit (graphics processing unit, GPU), a microprocessor unit (microprocessor unit, MPU), a field-programmable gate array (Field-Programmable Gate Array, FPGA), an application specific integrated circuit (Application Specific Integrated Circuit, ASIC), or may be a combination thereof. With reference to the solutions, in an example, information transferred between different layers in the communication apparatus 130 may be controlled by one same processor 1302. In an example, information transferred between different layers in the communication apparatus 130 may be controlled by a plurality of processors based on one same protocol definition.

The communication interface 1403 is configured to receive data sent by an external device and/or send data to an external device, and may be a wired link interface such as an Ethernet cable, or may be a wireless (for example, Wi-Fi, Bluetooth, or general wireless transmission technologies) link interface. Optionally, the communication interface 1403 may further include a transmitter (for example, a radio frequency transmitter or an antenna), a receiver, or the like coupled to the interface.

The processor 1402 in the communication apparatus 140 is configured to read computer program code stored in the memory 1401, to perform the following operations:
receiving first information from a secondary node through the communication interface 1403, where the first information indicates at least one piece of service feature information; and
sending second information to the secondary node through the communication interface 1403, where the second information is used for configuring a resource for the secondary node, and the resource corresponds to the at least one piece of service feature information.

The first information includes the at least one piece of service feature information or identifier information of the service feature information.

The first information further includes at least one of first access layer Qos information and a first application identifier, at least one of the first access layer Qos information and the first application identifier corresponds to a first service, and the resource is used for the first service.

The first access layer Qos information includes at least one of first access layer priority information, first access layer reliability information, and a first Qos identifier.

The sending, by the processor 1402, second information to the secondary node through the communication interface 1403 may include: controlling an access layer of a primary node to send the second information to the primary node through the communication interface 1403.

The at least one piece of service feature information includes at least one of sampling frequency, quantization precision of a sample value, a frame rate, an image resolution, a compression rate, and a data rate.

It should be noted that for specific implementations of the foregoing functional components, reference should be made to related descriptions in the foregoing method embodiments. Details are not described again in this embodiment of this application.

In an optional embodiment, the processor 1402 in the communication apparatus shown in FIG. 14 may be further configured to read computer program code stored in the memory 1401, so that the communication apparatus implements the method described in any implementation of the third aspect.

In an optional embodiment, the processor 1302 in the communication apparatus shown in FIG. 13 may be further configured to read computer program code stored in the memory 1301, so that the communication apparatus implements the method described in any implementation of the fourth aspect.

An embodiment of this application further provides a computer-readable storage medium. The computer-readable storage medium stores a computer program. When the computer program is run on one or more processors, the method in any one of the embodiments shown in FIG. 4a, FIG. 4b, FIG. 5, FIG. 6, FIG. 7, or FIG. 8 is performed.

An embodiment of this application further provides a chip system. The chip system includes at least one processor, a memory, and an interface circuit. The interface circuit is configured to provide information input and/or output for the at least one processor, and the at least one memory stores a computer program. When the computer program runs on one or more processors, the data communication method in any one of the embodiments shown in FIG. 4a, FIG. 4b, FIG. 5, FIG. 6, FIG. 7, or FIG. 8 is performed.

An embodiment of this application further provides a smart cockpit product. The smart cockpit product includes a first node (for example, an automobile cockpit domain controller CDC), and the primary node is the primary node in any one of the embodiments shown in FIG. 4a, FIG. 4b, FIG. 5, FIG. 6, FIG. 7, or FIG. 8. Further, the vehicle further includes a secondary node (for example, at least one of modules such as a camera, a screen, a microphone, a sound box, a radar, an electronic key, and a keyless entry and startup system controller), and the secondary node is the secondary node in any one of the embodiments shown in FIG. 4a, FIG. 4b, FIG. 5, FIG. 6, FIG. 7, or FIG. 8.

An embodiment of this application further provides a vehicle. The vehicle includes a primary node (for example, an automobile cockpit domain controller CDC). Further, the vehicle further includes a secondary node (for example, at least one of modules such as a camera, a screen, a microphone, a sound box, a radar, an electronic key, and a keyless entry and startup system controller), the primary node is the primary node in any one of the embodiments shown in FIG. 4 a, FIG. 4b, FIG. 5, FIG. 6, FIG. 7, or FIG. 8 and the secondary node is the secondary node in any one of the embodiments shown in FIG. 4 a, FIG. 4b, FIG. 5, FIG. 6, FIG. 7, or FIG. 8. An embodiment of this application further provides a computer program product. When the computer program product runs on one or more processors, the data communication method in any one of the embodiments shown in FIG. 4 a, FIG. 4b, FIG. 5, FIG. 6, FIG. 7, or FIG. 8 is performed.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially implemented. The computer may be a general-purpose computer, a dedicated computer, a computer network, or other programmable apparatuses. The computer instructions may be stored in a computer-readable storage medium, or may be transmitted by using a computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like.

Sequence adjustment, combination, or deletion may be performed on the steps in the method embodiments of this application based on an actual requirement.

Modules in the apparatus embodiments of this application may be combined, divided, or deleted based on an actual requirement.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A data communication method, comprising:
obtaining at least one piece of service feature information from an upper layer of a secondary node; and
sending first information to a primary node through an access layer of the secondary node, wherein the first information indicates the at least one piece of service feature information.

2. The method according to claim 1, wherein the sending first information to a primary node through an access layer of the secondary node comprises:
generating the first information at the access layer of the secondary node, and sending the first information to the primary node through the access layer.

3. The method according to claim 1 or 2, wherein the upper layer comprises at least one of a network and transport layer, a device layer, and an application.

4. The method according to any one of claims 1 to 3, wherein the first information comprises the at least one piece of service feature information or identifier information of the service feature information.

5. The method according to any one of claims 1 to 4, wherein the method further comprises:
receiving second information from the primary node through the access layer of the secondary node, wherein the second information is used for configuring a resource for the secondary node, and the resource is used for at least one service.

6. The method according to any one of claims 1 to 5, wherein the first information further comprises at least one of first access layer Qos information and a first application identifier, at least one of the first access layer Qos information and the first application identifier corresponds to a first service, and the resource is used for the first service.

7. The method according to claim 6, wherein the first access layer Qos information comprises at least one of first access layer priority information, first access layer reliability information, and a first Qos identifier.

8. The method according to any one of claims 5 to 7, wherein the resource corresponds to the at least one piece of service feature information.

9. The method according to any one of claims 1 to 8, wherein the at least one piece of service feature information comprises at least one of a sampling frequency, quantization precision of a sample value, a frame rate, an image resolution, a compression rate, and a data rate.

10. The method according to any one of claims 1 to 9, wherein the upper layer is the device layer, and the obtaining at least one piece of service feature information from an upper layer of a secondary node comprises:
obtaining the at least one piece of service feature information through an inter-layer interface SAP between the device layer and the access layer.

11. The method according to any one of claims 1 to 10, wherein the upper layer is the device layer, and the obtaining at least one piece of service feature information from an upper layer of a secondary node comprises:
obtaining the at least one piece of service feature information from the device layer through the network and transport layer, wherein the network and transport layer is between the device layer and the access layer.

12. A data communication method, comprising:
receiving first information from a secondary node, wherein the first information indicates at least one piece of service feature information; and
sending second information to the secondary node, wherein the second information is used for configuring a resource for the secondary node, and the resource corresponds to the at least one piece of service feature information.

13. The method according to claim 12, wherein the first information comprises the at least one piece of service feature information or identifier information of the service feature information.

14. The method according to claim 12 or 13, wherein the first information further comprises at least one of first access layer Qos information and a first application identifier, at least one of the first access layer Qos information and the first application identifier corresponds to a first service, and the resource is used for the first service.

15. The method according to claim 14, wherein the first access layer Qos information comprises at least one of first access layer priority information, first access layer reliability information, and a first Qos identifier.

16. The method according to claim 12, wherein the sending second information to the secondary node comprises:
sending the second information to the secondary node through an access layer of a primary node.

17. The method according to any one of claims 12 to 16, wherein the at least one piece of service feature information comprises at least one of a sampling frequency, quantization precision of a sample value, a frame rate, an image resolution, a compression rate, and a data rate.

18. A data communication method, comprising:
sending third information to a secondary node through an access layer of a primary node, wherein the third information indicates at least one piece of first service feature information; and
receiving a data packet from the secondary node, wherein the data packet corresponds to the at least one piece of service feature information.

19. The method according to claim 18, wherein the sending third information to a secondary node through an access layer of a primary node comprises:
generating the third information at the access layer of the primary node, and sending the third information to the secondary node through the access layer.

20. The method according to claim 18, wherein the method further comprises:
obtaining the at least one piece of service feature information from a device layer of the primary node.

21. The method according to claim 20, wherein the obtaining the at least one piece of service feature information from a device layer of the primary node comprises:
obtaining the at least one piece of service feature information from the device layer of the primary node through an inter-layer interface SAP between the device layer and the access layer of the primary node.

22. The method according to claim 20, wherein the obtaining the at least one piece of service feature information from a device layer of the primary node comprises:
obtaining the at least one piece of service feature information from the device layer of the primary node through a network and transport layer, wherein the network and transport layer is between the device layer and the access layer.

23. The method according to claim 20, wherein the obtaining the at least one piece of service feature information from a device layer of the primary node comprises:
obtaining the at least one piece of service feature information from the device layer of the primary node through an inter-layer interface SAP between a management entity and the access layer.

24. The method according to claim 18, wherein before the sending third information to a secondary node through an access layer of a primary node, the method further comprises:
receiving at least one piece of second service feature information from the secondary node, wherein the at least one piece of second service feature information is different from the at least one piece of first service feature information.

25. A data communication method, comprising:
receiving third information from a primary node through an access layer of a secondary node, wherein the third information indicates at least one piece of first service feature information; and
sending a data packet to the primary node, wherein the data packet corresponds to the at least one piece of service feature information.

26. The method according to claim 25, wherein the method further comprises:
sending at least one piece of second service feature information to the primary node.

27. The method according to claim 25, wherein the method further comprises:
sending the third information to a device layer of the secondary node through an inter-layer interface SAP between the device layer and the access layer.

28. The method according to claim 25, wherein the method further comprises:
sending the third information to a device layer through a network and transport layer of the secondary node, wherein the network and transport layer is between the device layer and the access layer.

29. The method according to claim 25, wherein the method further comprises:
generating, by using a device layer, the data packet corresponding to the at least one piece of service feature information.

30. The method according to claim 25, wherein the method further comprises:
sending the third information to a device layer by using a management entity; and
generating, by using the device layer, the data packet corresponding to the at least one piece of service feature information.

31. A communication apparatus, comprising a memory and at least one processor, wherein
the memory is configured to store computer-executable instructions, and the processor executes the computer-executable instructions stored in the memory, so that the communication apparatus implements the method according to any one of claims 1 to 11 or claims 25 to 30.

32. A communication apparatus, comprising a memory and at least one processor, wherein
the memory is configured to store computer-executable instructions, and the processor executes the computer-executable instructions stored in the memory, so that the communication apparatus implements the method according to any one of claims 12 to 17 or claims 18 to 24.

33. A computer-readable storage medium, wherein the computer-readable storage medium stores a computer program, and when the computer program is executed by a processor in a secondary node, the method according to any one of claims 1 to 11 or claims 25 to 30 is implemented.

34. A computer-readable storage medium, wherein the computer-readable storage medium stores a computer program, and when the computer program is executed by a processor in a primary node, the method according to any one of claims 12 to 17 or claims 18 to 24 is implemented.
